# EUROPEAN PATENT APPLICATION

(11) **EP 4 848 031 A1**
(43) Date of publication of application: **02.12.2026**
(21) Application number: 25774847.5
(22) Date of filing: 10.02.2025
(51) Int. Cl.: G06F 1/16

(54) **DISPLAY ASSEMBLY AND ELECTRONIC DEVICE COMPRISING SAME**

(30) Priority: 19.03.2024 KR 20240037652; 17.04.2024 KR 20240051453
(71) Applicant: Samsung Electronics Co., Ltd., Suwon-si, Gyeonggi-do 16677 (KR)
(72) Inventor: LEE, Ohhee, Suwon-si, Gyeonggi-do 16677 (KR); LEE, Howon, Suwon-si, Gyeonggi-do 16677 (KR); YOON, Byounguk, Suwon-si, Gyeonggi-do 16677 (KR); LEE, Chulhwan, Suwon-si, Gyeonggi-do 16677 (KR)
(74) Representative: Nederlandsch Octrooibureau
(86) International application number: PCT/KR2025/001932
(87) International publication number: WO 2025/198184

(57) **Abstract**

According to an embodiment of the present disclosure, an electronic device may comprise: a housing; a flexible display arranged on the housing; a multi-bar configured to support at least a portion of the flexible display, and including a plurality of bars; and a protective layer arranged on the outer surface of the flexible display, and including a first opening adjacent to the edge of the protective layer. A first bar of the plurality of bars may include a first fixing portion at least partially accommodated in the first opening such that the protective layer is fixed to the first bar. Various other embodiments may be possible.

## Description

### [Technical Field]

Various embodiments disclosed in the present document relate to an electronic device, for example, to a display assembly and an electronic device including the same.

### [Background Art]

Owing to the remarkable development of information communication technology and semiconductor technology, the distribution and use of various electronic devices is rapidly increasing. In particular, recent electronic devices have been developed so as to be portable and to allow communication.

An electronic device may refer to a device that performs a specific function according to a program installed therein, such as a home appliance, an electronic notebook, a portable multimedia player, a mobile communication terminal, a tablet PC, a video/audio device, a desktop/laptop computer, or a vehicle navigation device. For example, such electronic devices may output stored information as sound or image. As the integration density of electronic devices increases and ultrahigh-speed and/or large-capacity wireless communication becomes common, recently, various functions may be equipped in a single electronic device such as a mobile communication terminal. For example, not only a communication function, but also an entertainment function such as a game, a multimedia function such as music/video playback, a communication and security function for mobile banking, or a function of schedule management or an electronic wallet, are being integrated into a single electronic device. Such an electronic device is being downsized to be conveniently carried by a user.

As mobile communication services have expanded to multimedia service areas, the size of a display of an electronic device may be increased to be enlarged so that a user may sufficiently use multimedia services as well as voice calls or short messages.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

According to an embodiment of the disclosure, an electronic device may include a housing including a first housing part and a second housing part configured to move with respect to the first housing part, a flexible display disposed on the housing, a multi-bar configured to support at least a portion of the flexible display and including a plurality of bars, and a protective layer disposed on an outer surface of the flexible display and including a first opening disposed adjacent to an edge of the protective layer. A first bar among the plurality of bars may include a first fixing portion at least partially accommodated in the first opening such that the protective layer is fixed to the first bar.

According to an embodiment of the disclosure, a display assembly may include a flexible display, a multi-bar configured to support at least a portion of the flexible display and including a plurality of bars, and a protective layer disposed on an outer surface of the flexible display and including a first opening disposed adjacent to an edge of the protective layer. A first bar among the plurality of bars may include a first fixing portion at least partially accommodated in the first opening such that the protective layer is fixed to the first bar.

### [Brief Description of Drawings]

FIG. 1 is a block diagram illustrating an electronic device in a network environment according to various embodiments.
FIG. 2 is a view illustrating a state in which a second area of a display is accommodated inside an electronic device, according to an embodiment of the disclosure.
FIG. 3 is a view illustrating a state in which a second area of a display is visually exposed to an outside of an electronic device, according to an embodiment of the disclosure.
FIG. 4 is an exploded perspective view of an electronic device, according to an embodiment of the disclosure.
FIG. 5A is a cross-sectional view taken along line A-A' of FIG. 2, according to an embodiment of the disclosure.
FIG. 5B is a cross-sectional view taken along line B-B' of FIG. 3, according to an embodiment of the disclosure.
FIG. 6 is a side view illustrating a display assembly, according to an embodiment of the disclosure.
FIG. 7 is a plan view illustrating a display assembly, according to an embodiment of the disclosure.
FIG. 8 is a perspective view illustrating one bar of a multi-bar, according to an embodiment of the disclosure.
FIG. 9A is a plan view illustrating a protective layer, according to an embodiment of the disclosure.
FIG. 9B is a plan view illustrating a state in which a protective layer is stacked on a display, according to an embodiment of the disclosure.
FIG. 10A is a perspective view illustrating a multi-bar, a display, and a protective layer, according to an embodiment of the disclosure.
FIG. 10B is a cross-sectional view illustrating a multi-bar, a display, and a protective layer, according to an embodiment of the disclosure.
FIG. 11 is a perspective view illustrating a support plate and a protective layer, according to an embodiment of the disclosure.
FIG. 12A is a perspective view illustrating a multi-bar, a support plate, and a protective layer, according to an embodiment of the disclosure.
FIG. 12B is a perspective view illustrating a multi-bar, a support plate, and a protective layer, according to an embodiment of the disclosure.
FIG. 13 is a view illustrating an electronic device in a slide-in state, according to an embodiment of the disclosure.
FIG. 14 is a cross-sectional view illustrating a display assembly, according to an embodiment of the disclosure.
FIG. 15 is a view illustrating an electronic device in a slide-out state, according to an embodiment of the disclosure.
FIG. 16A is a cross-sectional view taken along line C-C' of FIG. 13, according to an embodiment of the disclosure.
FIG. 16B is a cross-sectional view taken along line D-D' of FIG. 15, according to an embodiment of the disclosure.
FIG. 16C is a cross-sectional view illustrating a display assembly, according to an embodiment of the disclosure.
FIG. 16D is a cross-sectional view illustrating a display assembly, according to an embodiment of the disclosure.
FIG. 17A is a view illustrating one bar of a plurality of bars, according to an embodiment of the disclosure.
FIG. 17B is a view illustrating one bar of a plurality of bars, according to an embodiment of the disclosure.
FIG. 18A is a perspective view illustrating a fixing portion, according to an embodiment of the disclosure.
FIG. 18B is a perspective view illustrating a multi-bar, a protective layer, and a fixing portion, according to an embodiment of the disclosure.
FIG. 18C is a cross-sectional view illustrating a multi-bar, a protective layer, and a fixing portion, according to an embodiment of the disclosure.
FIG. 19 is a cross-sectional view illustrating a multi-bar, a protective layer, and a fixing portion, according to an embodiment of the disclosure.
FIG. 20A is a perspective view illustrating a display assembly, according to an embodiment of the disclosure.
FIG. 20B is a perspective view illustrating a display assembly, according to an embodiment of the disclosure.
FIG. 21A is a view illustrating a protective layer and a first reinforcing member, according to an embodiment of the disclosure.
FIG. 21B is a view illustrating a protective layer and a first reinforcing member, according to an embodiment of the disclosure.
FIG. 21C is a cross-sectional view illustrating a multi-bar, a protective layer, and a first reinforcing member, according to an embodiment of the disclosure.
FIG. 22 is a view illustrating a protective layer and a second reinforcing member, according to an embodiment of the disclosure.
FIG. 23 is a cross-sectional view illustrating a multi-bar, a protective layer, and a second reinforcing member, according to an embodiment of the disclosure.
FIG. 24 is a plan view illustrating a protective layer, according to an embodiment of the disclosure.

### [Mode for Carrying out the Invention]

Hereinafter, embodiments of the disclosure will be described in detail with reference to the drawings so that those skilled in the art may easily implement the disclosure. However, the disclosure may be implemented in various different forms and is not limited to the embodiments described herein. In relation to the description of the drawings, the same or similar reference numerals may be used for the same or similar components. Further, in the drawings and the related descriptions, descriptions of well-known functions and configurations may be omitted for clarity and conciseness.

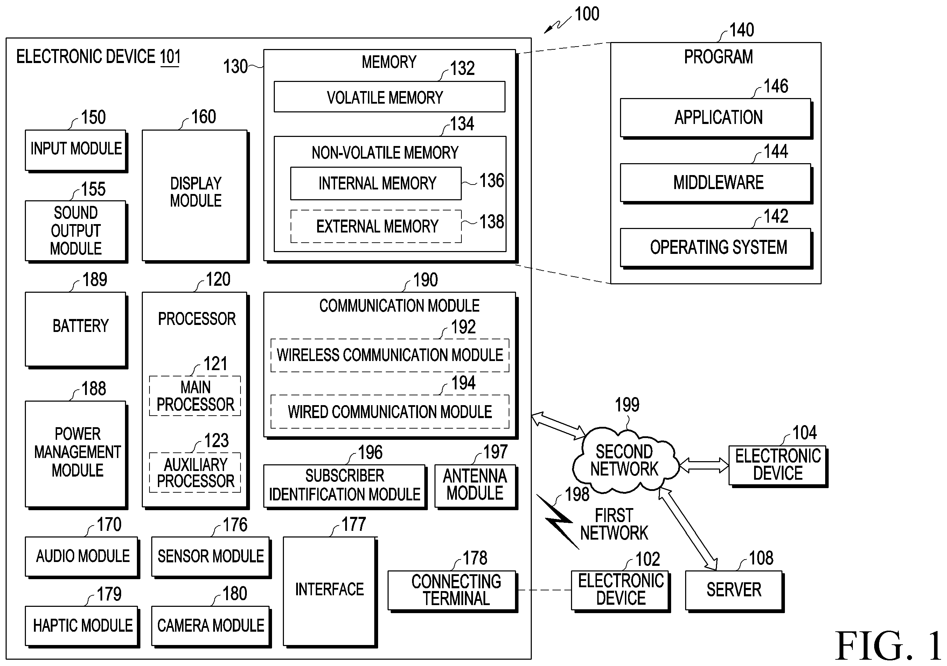

FIG. 1 is a block diagram illustrating an electronic device 101 in a network environment 100 according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In another embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

The electronic device according to various embodiments disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

Various embodiments of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to various embodiments disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{TM}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

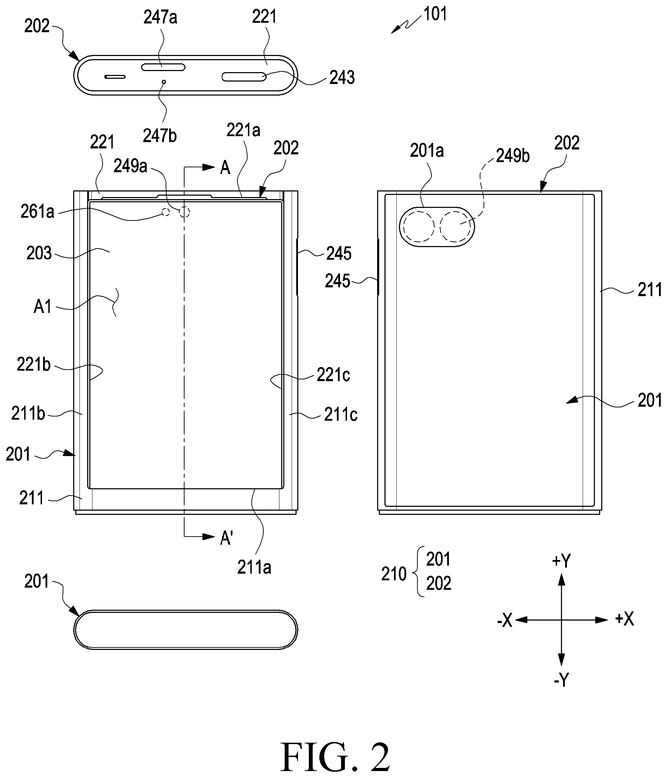

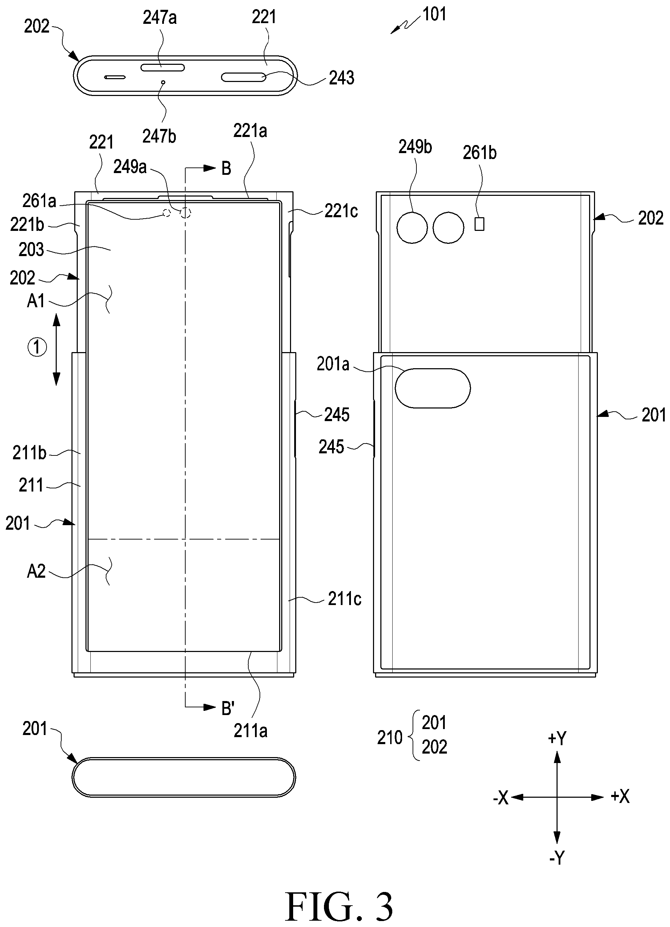

FIG. 2 is a view illustrating a state in which a second area (e.g., the second area A2 of FIG. 3) of a display is accommodated inside the electronic device 101, according to an embodiment of the disclosure. The second area extending from the first area may be at least partially hidden inside the electronic device on a different plane from the first area.

FIG. 3 is a view illustrating a state in which a second area of a display is visually exposed to an outside of an electronic device, according to an embodiment of the disclosure. The second area extending from the first area may be at least partially visually shown to the outside of the electronic device on substantially the same plane as the first area, based on movement of the second housing part.

FIGS. 2 and 3 illustrate a structure in which the display 203 (e.g., a flexible display or a rollable display) is expanded in the longitudinal direction (e.g., the +Y direction) when viewed from the front of the electronic device 101. However, the expansion direction of the display 203 is not limited to a single direction (e.g., the +Y direction). For example, the expansion direction of the display 203 may be design-changed to be expandable in an upward direction (+Y direction), a rightward direction (e.g., +X direction), a leftward direction (e.g., -X direction), and/or a downward direction (e.g., -Y direction).

The state illustrated in FIG. 2 may indicate a state in which substantially the entirety of the second area is hidden inside the electronic device on a different plane from the first area. For example, the state illustrated in FIG. 2 may be referred to as a slide-in state of the electronic device 101, or a closed state of the second area A2 of the display 203.

The state illustrated in FIG. 3 may indicate a state in which an area where the second area is visually exposed to the outside of the electronic device on substantially the same plane as the first area is maximized. For example, the state illustrated in FIG. 3 may be referred to as a slide-out state of the electronic device 101, or an open state of the second area A2 of the display 203.

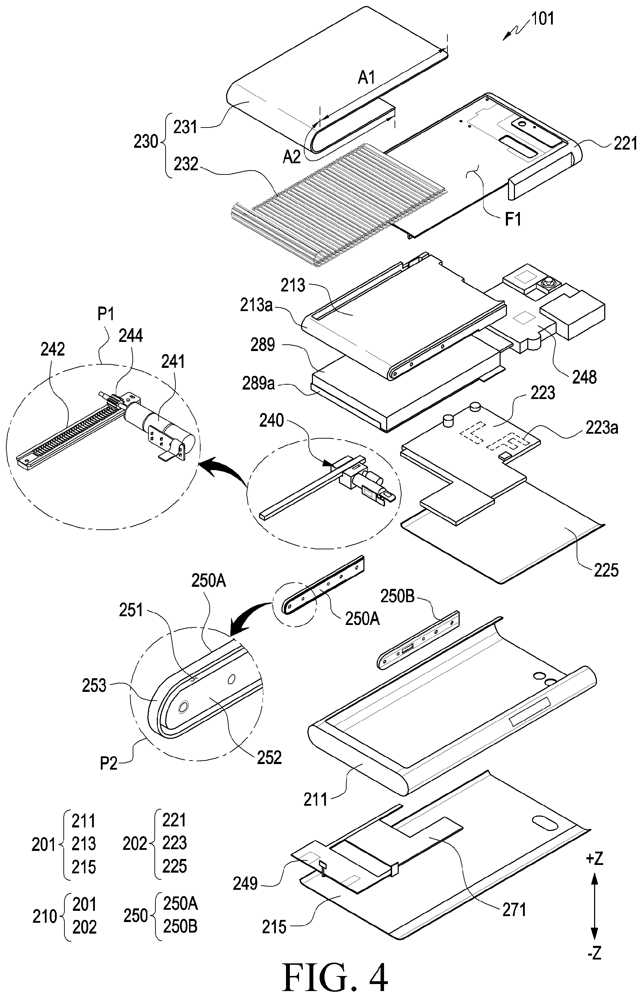

The embodiments of FIGS. 2 to 3 may be combinable with the embodiment of FIG. 1, or the embodiments of FIGS. 4 to 24.

Referring to FIGS. 2 and 3, an electronic device 101 (e.g., the electronic device 101 of FIG. 1) may include a housing 210. The housing 210 may include a first housing part 201 and a second housing part 202 arranged to be movable relative to the first housing part 201. In an embodiment, the electronic device 101 may be interpreted as having a structure in which the first housing part 201 is arranged to be slidably movable with respect to the second housing part 202. According to an embodiment, the second housing part 202 may be arranged to be reciprocable by a predetermined distance in the illustrated direction, e.g., the direction indicated by arrow ① in FIG. 3, with respect to the first housing part 201. The first housing part 201 may be referred to as a first housing 201, and the second housing part 202 may be referred to as a second housing 202.

According to an embodiment, the second housing part 202 may be referred to as a slide part or a slide housing, and may be movable relative to the first housing part 201. According to an embodiment, the second housing part 202 may accommodate various electric and electronic components such as a circuit board or a battery. When the electronic device 101 is in the slide-in state, the second housing part 202 may be defined as being in a retracted position, and when the electronic device 101 is in the slide-out state, the second housing part 202 may be defined as being in an extended position. For example, the second housing part 202 may be configured to move between the retracted position and the extended position with respect to the first housing part 201.

According to an embodiment, the slide-in state of the electronic device 101 (or the slide-out state of the electronic device 101) may be changed to the slide-out state of the electronic device 101 (or the slide-in state of the electronic device 101) based on a defined user input. For example, the slide-in state of the electronic device 101 (or the slide-out state of the electronic device 101) may be changed to the slide-out state (or the slide-in state of the electronic device 101) in response to a user input to a physical button exposed through a part of the first housing part 201 or a part of the second housing part 202. For example, the slide-in state (or the slide-out state of the electronic device 101) may be changed to the slide-out state (or the slide-in state of the electronic device 101) in response to a touch input to an executable object displayed within a screen display area (e.g., the first area A1). For example, the slide-in state (or the slide-out state of the electronic device 101) may be changed to the slide-out state (or the slide-in state of the electronic device 101) in response to a touch input having a contact point on the screen display area (e.g., the first area A1) and having a pressing strength greater than or equal to a reference strength. For example, the slide-in state (or the slide-out state of the electronic device 101) may be changed to the slide-out state (or the slide-in state of the electronic device 101) in response to a voice input received through a microphone of the electronic device 101. For example, the slide-in state (or the slide-out state of the electronic device 101) may be changed to the slide-out state (or the slide-in state of the electronic device 101) in response to an external force applied to the first housing part 201 and/or the second housing part 202 to move the second housing part 202 with respect to the first housing part 201. For example, the slide-in state (or the slide-out state of the electronic device 101) may be changed to the slide-out state (or the slide-in state of the electronic device 101) in response to a user input identified in an external electronic device (e.g., earbuds or a smart watch) connected to the electronic device 101. However, the method for causing the slide-in/out operation of the electronic device 101 is not limited thereto.

According to an embodiment, the first housing part 201 may accommodate a sub-circuit board electrically connected to an actuator (e.g., a motor), a speaker, a sim socket, and/or a main circuit board. The second housing part 202 may accommodate a main circuit board on which electric components such as an application processor (AP) or a communication processor (CP) are mounted. According to an embodiment, the second housing part 202 may accommodate a sub-circuit board electrically connected to an actuator, a speaker, a sim socket, and/or a main circuit board, and the first housing part 201 may accommodate a main circuit board on which electric components such as an application processor (AP) or a communication processor (CP) are mounted. According to an embodiment, the sub-circuit board and the main circuit board may be disposed in the first housing part 201 or may be disposed in the second housing part 202.

According to an embodiment, the first housing part 201 may include a first cover member 211 (e.g., a main case). The first cover member 211 may include a 1-1 side wall 211a, a 1-2 side wall 211b extending from the 1-1 side wall 211a, and a 1-3 side wall 211c extending from the 1-1 side wall 211a and substantially parallel to the 1-2 side wall 211b. According to an embodiment, the 1-2 side wall 211b and the 1-3 side wall 211c may be formed substantially perpendicular to the 1-1 side wall 211a.

According to an embodiment, the 1-1 side wall 211a, the 1-2 side wall 211b, and the 1-3 side wall 211c of the first cover member 211 may be formed in a shape in which one side (e.g., the front face) is opened so as to accommodate (or surround) at least a portion of the second housing part 202. For example, at least a portion of the second housing part 202 may be surrounded with respect to the first housing part 201, and may slide-move in a direction parallel to the first surface (e.g., the first surface F1 of FIG. 4), e.g., in the direction of arrow ①, while being guided by the first housing part 201. According to an embodiment, the 1-1 side wall 211a, the 1-2 side wall 211b, and/or the 1-3 side wall 211c of the first cover member 211 may be integrally formed. According to an embodiment, the 1-1 side wall 211a, the 1-2 side wall 211b, and/or the 1-3 side wall 211c of the first cover member 211 may be formed as separate structures and may be coupled or assembled.

According to an embodiment, the first cover member 211 may be formed to surround at least a portion of the display 203. For example, at least a portion of the display 203 may be formed to be surrounded by the 1-1 side wall 211a, the 1-2 side wall 211b, and/or the 1-3 side wall 211c of the first cover member 211.

According to an embodiment, the second housing part 202 may include a second cover member 221 (e.g., a slide plate). The second cover member 221 may have a plate shape and may include a first surface (e.g., the first surface F1 of FIG. 4) for supporting internal components. For example, the second cover member 221 may support at least a portion of the display 203 (e.g., the first area A1). According to an embodiment, the second cover member 221 may be referred to as a front cover.

According to an embodiment, the second cover member 221 may include a 2-1 side wall 221a, a 2-2 side wall 221b extending from the 2-1 side wall 221a, and a 2-3 side wall 221c extending from the 2-1 side wall 221a and substantially parallel to the 2-2 side wall 221b. According to an embodiment, the 2-2 side wall 221b and the 2-3 side wall 221c may be formed substantially perpendicular to the 2-1 side wall 221a.

According to an embodiment, as the second housing part 202 moves in a first direction (e.g., the ① direction of FIG. 3) parallel to the 2-2 side wall 221b or the 2-3 side wall 221c, the slide-in state and the slide-out state of the electronic device 101 may be formed. In the slide-in state of the electronic device 101, the second housing part 202 may be positioned at a first distance from the 1-1 side wall 211a of the first housing part 201, and in the slide-out state of the electronic device 101, the second housing part 202 may be moved to be positioned at a second distance greater than the first distance from the 1-1 side wall 211a of the first housing part 201. In an embodiment, in the slide-in state of the electronic device 101, the first housing part 201 may be formed to surround portions of the 2-2 side wall 221b and the 2-3 side wall 221c.

According to an embodiment, the second housing part 202 may be configured to move between a first position (e.g., FIG. 2) and a second position (e.g., FIG. 3) with respect to the first housing part 201.

According to an embodiment, the electronic device 101 may have an intermediate state between the slide-in state of FIG. 2 (e.g., a fully closed state) and the slide-out state of FIG. 3 (e.g., a fully opened state). The distance between the 1-1 side wall 211a and the 2-1 side wall 221a in the intermediate state of the electronic device 101 may be shorter than the distance between the 1-1 side wall 211a and the 2-1 side wall 221a of the electronic device 101 in the fully opened state, and longer than the distance between the 1-1 side wall 211a and the 2-1 side wall 221a of the electronic device 101 in the fully closed state. According to an embodiment, as at least a portion of the display 203 slides in the intermediate state of the electronic device 101, an area exposed to the outside may be variable. For example, the ratio of the width (e.g., the length in the X direction) and the height (e.g., the length in the Y direction) of the display 203 and/or the distance between the 1-1 side wall 211a and the 2-1 side wall 221a in the intermediate state of the electronic device 101 may be changed based on the slide movement of the electronic device 101.

According to an embodiment, the electronic device 101 may include the display 203, a key input device 245, a connector hole 243, audio modules 247a, 247b, or camera modules 249a, 249b. According to an embodiment, the electronic device 101 may further include an indicator (e.g., an LED device) or various sensor modules.

According to an embodiment, the display 203 may be formed such that the size of a portion visible from the front side of the housing 210 is changed based on the slide movement of the second housing part 202. According to an embodiment, the display 203 may include a first area A1 and a second area A2 configured to be exposed to the outside of the electronic device 101 based on the slide movement of the second housing part 202. The first area A1 may be defined and/or referred to as a first part or a first display area. The second area A2 may be defined and/or referred to as a second part or a second display area. Based on the movement of the second housing part 202 with respect to the first housing part 201, at least a portion of the second area A2 may be configured to be bent.

According to an embodiment, as the second housing part 202 moves between the retracted position and the extended position with respect to the first housing part 201, the size of the display 203 shown toward the outer front face of the electronic device 101 may vary. For example, when the second housing part 202 is positioned at the retracted position (e.g., FIG. 2) with respect to the first housing part 201, the size (or area) of the display 203 shown toward the outer front face of the electronic device 101 may be substantially minimized. Further, when the second housing part 202 is positioned at the extended position (e.g., FIG. 3) with respect to the first housing part 201, the size (or area) of the display 203 shown toward the outer front face of the electronic device 101 may be substantially maximized.

According to an embodiment, the first area A1 may be disposed on the second housing part 202. For example, the first area A1 may be disposed on the second cover member 221 of the second housing part 202. According to an embodiment, the second area A2 extends from the first area A1, and as the second housing part 202 slide-moves with respect to the first housing part 201, may be accommodated inside the first housing part 201 or may be visually exposed to the outside of the electronic device 101. According to an embodiment, as the electronic device 101 changes from the slide-in state to the slide-out state, the display 203 may be expanded in a downward direction (e.g., the -Y direction) of the electronic device 101. For example, in the slide-out state of the electronic device 101, the second area A2 may be visually exposed below (e.g., in the -Y direction) the display 203. According to an embodiment, as the electronic device 101 changes from the slide-in state to the slide-out state, the display 203 may be expanded in an upward direction (e.g., the +Y direction) of the electronic device 101. For example, in the slide-out state of the electronic device 101, the second area A2 may be visually exposed above (e.g., in the +Y direction) the display 203.

According to an embodiment, the second area A2 may substantially move while being guided by a region (e.g., the guide rail 250 of FIG. 4) of the first housing part 201, and may be accommodated in a space located inside the first housing part 201 or may be exposed to the outside of the electronic device 101. According to an embodiment, the second area A2 may move based on the slide movement of the second housing part 202 in a first direction (e.g., the direction indicated by arrow ①). For example, while the second housing part 202 slide-moves, a portion of the second area A2 may be deformed into a curved shape at a position corresponding to the curved surface 213a (e.g., a curved portion) of the first housing part 201.

According to an embodiment, when viewed from the upper side (e.g., the +Z direction or the front direction of the electronic device) of the second cover member 221 (e.g., the front cover), when the electronic device 101 changes from the slide-in state to the slide-out state (e.g., when the second housing part 202 slide-moves so as to be extended with respect to the first housing part 201), the second area A2 may gradually be exposed to the outside of the first housing part 201, forming substantially the same plane together with the first area A1. According to an embodiment, the display 203 may be coupled to or arranged adjacent to a touch sensing circuit, a pressure sensor for measuring the intensity (pressure) of a touch, and/or a digitizer for detecting a magnetic field-type stylus pen. According to an embodiment, regardless of the slide-in state or the slide-out state of the electronic device 101, a portion of the exposed second area A2 may be positioned on a portion of the first housing part (e.g., the curved surface 213a of FIG. 4), and a portion of the second area A2 may maintain a curved shape at a position corresponding to the curved surface 213a.

According to an embodiment, the key input device 245 may be located in a region of the housing 210 (e.g., the first housing part 201 and/or the second housing part 202). Depending on the appearance and the use state, the electronic device 101 may be designed such that the illustrated key input device 245 is omitted or additional key input device(s) are included. According to an embodiment, the electronic device 101 may include a key input device that is not illustrated, e.g., a home key button or a touch pad disposed around the home key button. According to an embodiment, at least a portion of the key input device 245 may be disposed on the 1-1 side wall 211a, the 1-2 side wall 211b, and/or the 1-3 side wall 211c of the first housing part 201. According to an embodiment, at least a portion of the key input device 245 may be disposed on the 2-1 side wall 221a, the 2-2 side wall 221b, and/or the 2-3 side wall 221c of the second housing part 202.

According to an embodiment, the connector hole 243 may be omitted according to embodiments, and may accommodate a connector (e.g., a USB connector) for transmitting/receiving power and/or data to/from an external electronic device. According to an embodiment, the electronic device 101 may include a plurality of connector holes 243, and some of the plurality of connector holes 243 may function as connector holes for transmitting/receiving audio signals to/from an external electronic device. In the illustrated embodiment, the connector hole 243 is positioned in the second housing part 202, but is not limited thereto, and the connector hole 243 or a connector hole not illustrated may be positioned in the first housing part 201.

According to an embodiment, the audio modules 247a, 247b may include at least one speaker hole 247a or at least one microphone hole 247b. One of the speaker holes 247a may be provided as a receiver hole for a voice call, and the other one may be provided as an external speaker hole. The electronic device 101 may include a microphone for acquiring sound, and the microphone may acquire sound from the outside of the electronic device 101 through the microphone hole 247b. According to an embodiment, the electronic device 101 may include a plurality of microphones to sense the direction of the sound. According to an embodiment, the electronic device 101 may include an audio module in which the speaker hole 247a and the microphone hole 247b are implemented as one hole, or may include a speaker in which the speaker hole 247a is excluded (e.g., a piezo speaker). According to an embodiment, the speaker hole 247a and the microphone hole 247b may be positioned in the first housing part 201 and/or the second housing part 202.

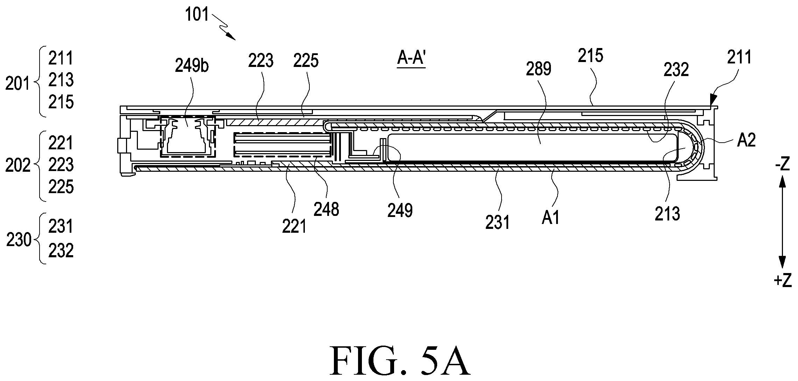

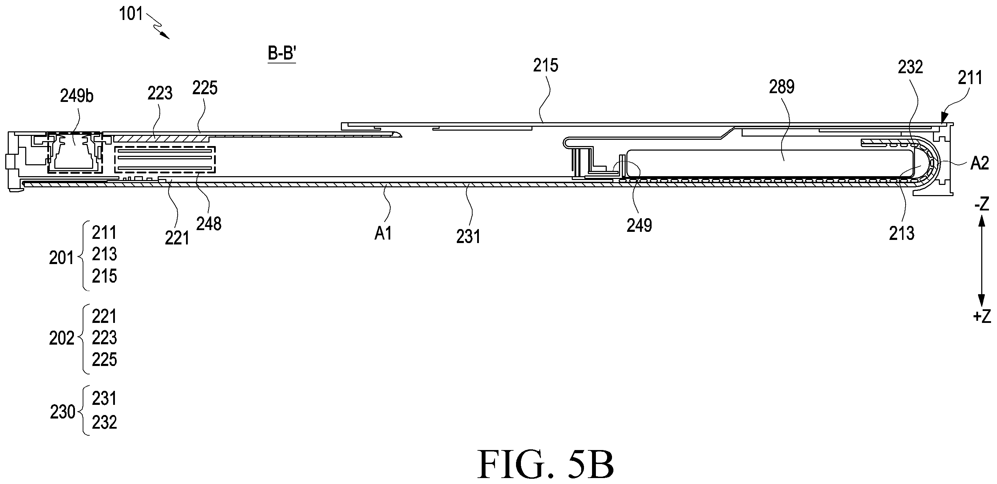

According to an embodiment, the camera modules 249a, 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a macro camera, and according to embodiments, may measure a distance to a subject by including an infrared projector and/or an infrared receiver. The camera modules 249a, 249b may include one or a plurality of lenses, an image sensor, and/or an image signal processor. The first camera module 249a may be arranged to face the same direction as the display 203. For example, the first camera module 249a may be arranged around the first area A1 or in an area overlapping with the display 203, and when arranged in the area overlapping with the display 203, may capture a subject through the display 203. According to an embodiment, the first camera module 249a may not be visually exposed to the screen display area (e.g., the first area A1) and may include a hidden under display camera (UDC). According to an embodiment, the second camera module 249b may capture a subject in a direction opposite to the first area A1. According to an embodiment, the first camera module 249a and/or the second camera module 249b may be disposed on the second housing part 202. According to an embodiment, the second camera module 249b may be provided in plurality to provide various arrangements. For example, the plurality of second camera modules 249b may be arranged along a width direction (X-axis direction) that is a direction substantially perpendicular to the slide movement direction (e.g., the Y-axis direction) of the electronic device 101. According to an embodiment, the plurality of second camera modules 249b may be arranged along the slide movement direction (e.g., the Y-axis direction) of the electronic device 101. According to an embodiment, the plurality of second camera modules 249b may be arranged along N * M rows and columns like a matrix.

According to an embodiment, the second camera module 249b may not be visually exposed to the outside of the electronic device 101 in the slide-in state of the electronic device 101, and may capture the outside of the electronic device 101 in the slide-out state of the electronic device 101. According to an embodiment, the second camera module 249b may capture the outside of the electronic device 101 in the slide-in state and/or the slide-out state of the electronic device 101. For example, at least a portion of the housing 210 (e.g., the first rear plate 215 and/or the second rear plate 225 of FIG. 4) may be substantially transparent, and the second camera module 249b may capture the outside of the electronic device 101 through the first rear plate 215 and/or the second rear plate 225. According to an embodiment, the second camera module 249b may be visually exposed to the outside of the electronic device 101 in the slide-in state and the slide-out state of the electronic device 101 and may capture the outside. For example, the first housing part 201 (e.g., the first rear plate 215 of FIG. 4) may include an opening 201a for the second camera module 249b.

According to an embodiment, an indicator (not illustrated) of the electronic device 101 may be disposed in the first housing part 201 or the second housing part 202, and may provide state information of the electronic device 101 as a visual signal by including a light emitting diode. The sensor modules 261a, 261b of the electronic device 101 may generate an electrical signal or a data value corresponding to an internal operating state of the electronic device 101 or an external environmental state. The sensor modules 261a, 261b may include a proximity sensor, a fingerprint sensor, and/or a biometric sensor (e.g., an iris/facial recognition sensor or an HRM sensor). In an embodiment, the sensor modules 261a, 261b may further include at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor modules 261a, 261b may be disposed in the first housing part 201 and/or the second housing part 202. For example, the sensor modules 261a, 261b may include a first sensor module 261a (e.g., a proximity sensor or an illuminance sensor) disposed on the front side of the electronic device 101 and/or a second sensor module 261b (e.g., a heart rate monitoring (HRM) sensor) disposed on the rear side of the electronic device 101.

FIG. 4 is an exploded perspective view of an electronic device, according to an embodiment of the disclosure.

FIG. 5A is a cross-sectional view taken along line A-A' of FIG. 2, according to an embodiment of the disclosure.

FIG. 5B is a cross-sectional view taken along line B-B' of FIG. 3, according to an embodiment of the disclosure.

Referring to FIG. 4, FIG. 5A, and/or FIG. 5B, the electronic device 101 (e.g., the electronic device 101 of FIGS. 1 to 3) may include a housing 210, a first housing part 201, a second housing part 202, a display assembly 230, and a driving structure 240. The configurations of the first housing part 201, the second housing part 202, and the display assembly 230 of FIG. 4, FIG. 5A, and/or FIG. 5B may be identical in whole or in part to the configurations of the housing 210, the first housing part 201, the second housing part 202, and the display 203 of FIG. 2 and/or FIG. 3.

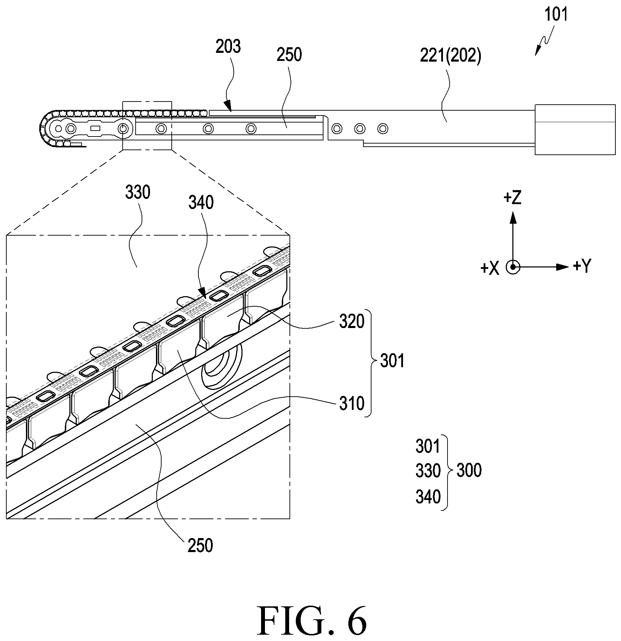

The embodiments of FIGS. 4 to 5B may be combinable with the embodiments of FIGS. 1 to 3 or the embodiments of FIGS. 6 to 24.

According to an embodiment, the housing 210 may include a first housing part 201 or a second housing part 202 coupled to be movable with respect to the first housing part 201.

According to an embodiment, the first housing part 201 may include a first cover member 211 (e.g., the first cover member 211 of FIGS. 2 and 3), a frame 213, and a first rear plate 215.

According to an embodiment, the first cover member 211 may accommodate at least a portion of the frame 213 and may accommodate components (e.g., the battery 289) located in the frame 213. According to an embodiment, the first cover member 211 may be formed to surround at least a portion of the second housing part 202. According to an embodiment, the first cover member 211 may protect components (e.g., the second circuit board 249 and the frame 213) located in the first housing part 201 from external impact. According to an embodiment, the second circuit board 249 electrically connected to electric components (e.g., an actuator, a speaker, a sim socket, and/or the first circuit board 248) may be connected to the first cover member 211.

According to an embodiment, the frame 213 may be connected to the first cover member 211. For example, the frame 213 may be connected to the first cover member 211, and the second housing part 202 may move relative to the first cover member 211 and/or the frame 213. According to an embodiment, the frame 213 may accommodate the battery 289. For example, the frame 213 may include a groove for accommodating the battery 289. The frame 213 may be connected to a battery cover 289a, and may surround at least a portion of the battery 289 together with the battery cover 289a. According to an embodiment, the frame 213 may include a curved surface 213a facing the display assembly 230.

According to an embodiment, the first rear plate 215 may substantially form at least a portion of the exterior of the first housing part 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be manufactured using at least one of metal, glass, synthetic resin, or ceramic.

According to an embodiment, the second housing part 202 may include a second cover member 221 (e.g., the second cover member 221 of FIGS. 2 and 3), a rear cover 223, and a second rear plate 225.

According to an embodiment, the second cover member 221 may be connected to the first housing part 201 through the guide rail 250, and may linearly reciprocate in one direction (e.g., the direction of arrow ① in FIG. 3) while being guided by the guide rail 250.

According to an embodiment, the second cover member 221 may support at least a portion of the display 231. For example, the second cover member 221 may include a first surface F1, and the first area A1 of the display 231 may be substantially positioned on the first surface F1 and maintained in a flat form. According to an embodiment, the second cover member 221 may be formed of a metal material and/or a non-metal material (e.g., polymer). According to an embodiment, the first circuit board 248 accommodating electronic components (e.g., the processor 120 and/or the memory 130 of FIG. 1) may be connected to the second cover member 221. According to an embodiment, the second cover member 221 may protect components (e.g., the first circuit board 248 and the rear cover 223) located in the second housing part 202 from external impact.

According to an embodiment, the rear cover 223 may protect components (e.g., the first circuit board 248) located on the second cover member 221. For example, the rear cover 223 may be connected to the second cover member 221 and may be formed to surround at least a portion of the first circuit board 248. According to an embodiment, the rear cover 223 may include an antenna pattern (e.g., at least one antenna element 223a) for communicating with an external electronic device. For example, when the rear cover 223 is formed as an injection-molded product (e.g., an antenna carrier) of a dielectric material, the at least one antenna element 223a may be disposed on the outer surface (e.g., one surface facing the -Z-axis direction) of the rear cover 223. For example, the at least one antenna element 223a may include a laser direct structuring (LDS) antenna pattern formed on the outer surface of the rear cover 223. For example, the at least one antenna element 223a may be formed in a manner of being embedded when the rear cover 223 is injection-molded. For example, the at least one antenna element 223a may be electrically connected to a wireless communication circuit (e.g., the wireless communication module 192 of FIG. 1) disposed on the first circuit board 248 so as to be set to transmit or receive a wireless signal in a designated frequency band (e.g., a legacy band).

According to an embodiment, the second rear plate 225 may substantially form at least a portion of the exterior of the second housing part 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be manufactured using at least one of metal, glass, synthetic resin, or ceramic.

According to an embodiment, the display assembly 230 may include a display 231 (e.g., the display 203 of FIG. 2 and/or FIG. 3) and a multi-bar 232 supporting the display 231. According to an embodiment, the display 231 may be referred to as a flexible display, a foldable display, and/or a rollable display. According to an embodiment, the first area A1 of the display 231 may be supported by a rigid body, and the second area A2 may be supported by a bendable structure. For example, the first area A1 may be supported by the first surface F1 of the second cover member 221 or a plate not illustrated. The second area A2 may be supported by the multi-bar 232.

According to an embodiment, the multi-bar 232 may be connected or attached to at least a portion (e.g., the second area A2) of the display 231. According to an embodiment, as the second housing part 202 slide-moves, the multi-bar 232 may move with respect to the first housing part 201. In the slide-in state of the electronic device 101 (e.g., FIG. 2), the multi-bar 232 may mostly be accommodated inside the first housing part 201 and may be positioned between the first cover member 211 and the second cover member 221. According to an embodiment, at least a portion of the multi-bar 232 may move corresponding to the curved surface 213a positioned at the edge of the frame 213. According to an embodiment, the multi-bar 232 may be referred to as a display support member, a support structure, or a multi-bar structure. The multi-bar 232 may include a plurality of bars. According to an embodiment, the multi-bar 232 may be in the form of a single bendable plate.

According to an embodiment, the driving structure 240 may move the second housing part 202 relative to the first housing part 201. For example, the driving structure 240 may include an actuator 241 configured to generate a driving force for the slide movement of the second housing part 202 with respect to the first housing part 201. The driving structure 240 may include a gear 244 (e.g., a pinion) connected to the actuator 241 and a rack 242 configured to be engaged with the gear. Referring to FIG. 4, components (e.g., the actuator 241, the rack 242, and the gear 244) of the driving structure 240 inverted (e.g., facing the -Z-axis direction) are illustrated within circle P1.

According to an embodiment, the housing in which the rack 242 is located and the housing in which the actuator 241 is located may be different. According to an embodiment, the actuator 241 may be connected to the first housing part 201, and the rack 242 may be connected to the second housing part 202. According to an embodiment, the actuator 241 may be connected to the second housing part 202, and the rack 242 may be connected to the first housing part 201.

According to an embodiment, the actuator 241 may be controlled by a processor (e.g., the processor 120 of FIG. 1). For example, the processor 120 may include an actuator driver driving circuit, and may transmit a pulse width modulation (PWM) signal for controlling the speed of the actuator 241 and/or the torque of the actuator 241 to the actuator 241. According to an embodiment, the actuator 241 may be electrically connected to the processor (e.g., the processor 120 of FIG. 1) located on the circuit board (e.g., the first circuit board 248 of FIG. 4) using a flexible printed circuit board.

According to an embodiment, the second housing part 202 may accommodate the first circuit board 248 (e.g., a main board). According to an embodiment, a processor, memory, and/or an interface may be mounted on the first circuit board 248. The processor may include, for example, one or more of a central processing unit, an application processor, a graphics processing unit, an image signal processor, a sensor hub processor, or a communication processor. According to various embodiments, the first circuit board 248 may include a radio frequency cable (FRC) of a flexible printed circuit board type. The first circuit board 248 may be disposed on at least a portion of the second cover member 221, and may be electrically connected to an antenna module (e.g., the antenna module 197 of FIG. 1) and a communication module (e.g., the communication module 190 of FIG. 1).

According to an embodiment, the memory may include, for example, a volatile memory or a non-volatile memory.

According to an embodiment, the interface may include, for example, a high definition multimedia interface (HDMI), a universal serial bus (USB) interface, an SD card interface, and/or an audio interface. The interface may, for example, electrically or physically connect the electronic device 101 with an external electronic device, and may include a USB connector, an SD card/MMC connector, or an audio connector.

According to an embodiment, the electronic device 101 may include a second circuit board 249 (e.g., a sub-circuit board) spaced apart from the first circuit board 248 (e.g., a main circuit board) within the first housing part 201. The second circuit board 249 may be electrically connected to the first circuit board 248 through a flexible board. The second circuit board 249 may be electrically connected to electric components disposed in an end region of the electronic device 101, such as the battery 289 or a speaker and/or a sim socket, to transmit signals and power. According to an embodiment, the second circuit board 249 may accommodate the antenna member 271 (e.g., a coil) or may be connected to the antenna member 271. The antenna member 271 may include a multi-function coil (MFC) antenna including a wireless charging antenna for a wireless charging function, a near field communication (NFC) antenna for an NFC function, and/or a magnetic secure transmission (MST) antenna for performing an electronic payment function. For example, the battery 289 may receive power from an external electronic device using the antenna member 271 for wireless charging. According to an embodiment, the battery 289 may transmit power to an external electronic device using the antenna member 271 for wireless charging.

According to an embodiment, the battery 289 is a device for supplying power to at least one component of the electronic device 101, and may include a non-rechargeable primary battery, a rechargeable secondary battery, or a fuel cell. The battery 289 may be integrally disposed inside the electronic device 101, or may be detachably disposed with respect to the electronic device 101. According to an embodiment, the battery 289 may be formed as a single integrated battery or may include a plurality of detachable batteries. According to an embodiment, the battery 289 may be positioned in the frame 213. For example, the battery 289 may be surrounded by the frame 213 and the battery cover 289a. According to an embodiment, it may be positioned within the second housing part 202 and may slide-move together with the second housing part 202.

According to an embodiment, the guide rail 250 may guide the movement of the multi-bar 232. The guide rail 250 may include a first guide rail 250A and a second guide rail 250B. The first guide rail 250A may be disposed between the frame 213 and the 1-2 side wall (e.g., the 1-2 side wall 211b of FIGS. 2 to 3) of the first housing part 201. The second guide rail 250B may be disposed between the frame 213 and the 1-3 side wall (e.g., the 1-3 side wall 211c of FIGS. 2 to 3) of the first housing part 201. The configuration of the second guide rail 250B may be partially or entirely identical to the configuration of the first guide rail 250A. The multi-bar 232 may slide-move along the slit 251 formed in the guide rail 250. According to an embodiment, the guide rail 250 may be connected to the first housing part 201. For example, the guide rail 250 may be connected to the first cover member 211 and/or the frame 213. According to an embodiment, the slit 251 may be referred to as a groove or recess formed on the inner surface of the guide rail 250. Referring to FIG. 4, an enlarged guide rail 250 is illustrated within circle P2.

According to an embodiment, the guide rail 250 may provide force to the multi-bar 232 based on the driving of the actuator 241.

According to an embodiment, when the electronic device 101 changes from the slide-in state to the slide-out state, at least a portion of the second housing part 202 may slide-move, through the driving of the actuator 241, so as to be visually exposed from the first housing part 201 to the outside. For example, the gear 244 may rotate in a first rotation direction based on the driving of the actuator 241. As the rack 242 is fixed on the second cover member 221 of the second housing part 202, the second housing part 202 may slide-move, based on the slide movement of the rack 242 toward the slide-out direction, so as to be visually exposed to the outside of the first housing part 201.

According to an embodiment, when the electronic device 101 changes from the slide-in state to the slide-out state, the guide rail 250 may be configured to guide the movement of the multi-bar 232. For example, the multi-bar 232 may move along the slit 251 of the guide rail 250. For example, at least a portion of the multi-bar 232 may change position on the slit 251 formed between the inner portion 252 and the outer portion 253. The second housing part 202 may slide-move so as to be extended with respect to the first housing part 201. At least a portion of the display assembly 230 that was accommodated between the first cover member 211 and the frame 213 may be extended toward the front.

According to an embodiment, when the electronic device 101 changes from the slide-out state to the slide-in state, at least a portion of the second housing part 202 may slide-move, through the driving of the actuator 241, so as to be inserted into the inside of the first housing part 201. For example, the gear 244 may rotate in a second rotation direction opposite to the first rotation direction based on the driving of the actuator 241. As the rack 242 is fixed on the second cover member 221 of the second housing part 202, the second housing part 202 may slide-move, based on the slide movement of the rack 242 toward the slide-in direction, so as to enter the inside of the first housing part 201.

According to an embodiment, when the electronic device 101 changes from the slide-out state to the slide-in state, the outer portion 253 of the guide rail 250 may provide force to the bent multi-bar 232. The multi-bar 232 provided with the force may move along the slit 251 of the guide rail 250, and at least a portion of the second housing part 202 may slide-move so as to be accommodated in the first housing part 201. At least a portion of the display assembly 230 may be accommodated between the first cover member 211 and the frame 213.

According to an embodiment, the electronic device 101 may be configured to stop at a designated intermediate state between the slide-in state and the slide-out state by controlling the driving of the actuator 241 (free stop function). According to an embodiment, the electronic device 101 may change to the slide-in state, the intermediate state, or the slide-out state through a user's operation while no driving force is provided to the actuator 241.

Referring to FIG. 5A, in the slide-in state of the electronic device 101, at least a portion of the second housing part 202 may be arranged to be accommodated in the first housing part 201. As the second housing part 202 is arranged to be accommodated in the first housing part 201, the overall size of the electronic device 101 may be reduced. According to an embodiment, when the second housing part 202 is accommodated in the first housing part 201, the visually exposed size of the display 231 may be minimized. For example, when the second housing part 202 is completely accommodated in the first housing part 201, the first area A1 of the display 231 may be visually exposed, and at least a portion (e.g., a portion facing the -Z axis) of the second area A2 may be disposed between the battery 289 and the first rear plate 215.

Referring to FIG. 5B, in the slide-out state of the electronic device 101, at least a portion of the second housing part 202 may protrude from the first housing part 201. As the second housing part 202 protrudes from the first housing part 201, the overall size of the electronic device 101 may be increased. According to an embodiment, when the second housing part 202 protrudes from the first housing part 201, at least a portion of the second area A2 of the display 231 may be visually exposed to the outside of the electronic device 101 together with the first area A1.

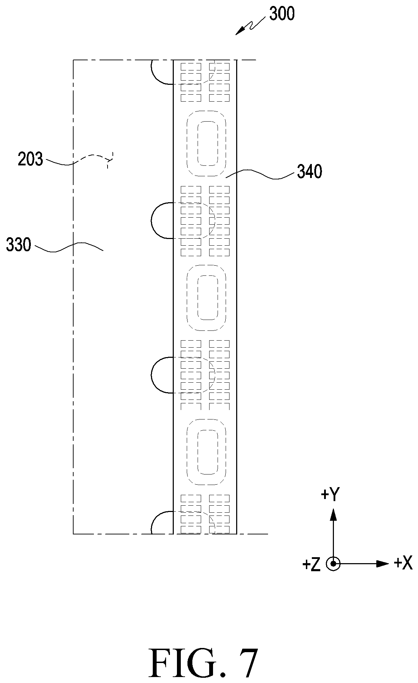

FIG. 6 is a side view illustrating a display assembly, according to an embodiment of the disclosure. FIG. 7 is a plan view illustrating a display assembly, according to an embodiment of the disclosure.

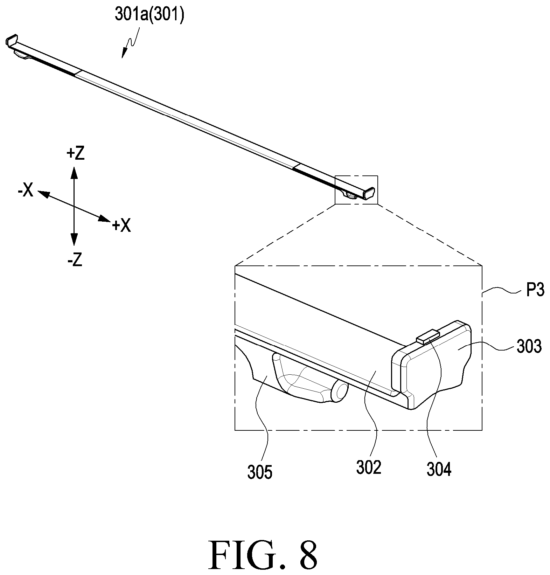

The embodiments of FIGS. 6 to 7 may be combined with the embodiments of FIGS. 1 to 5B or the embodiments of FIGS. 8 to 24.

Referring to FIGS. 6 and 7, the electronic device 101 (e.g., the electronic device 101 of FIG. 1, or the electronic device 101 of FIGS. 2 to 5B) may include a second housing part 202, a display 203, a guide rail 250, or a display assembly 300.

According to an embodiment, the second housing part 202 may be configured to be movable relative to a first housing part (e.g., the first housing part 201 of FIGS. 2 to 4). A second cover member 221 (e.g., the second cover member 221 of FIGS. 2 to 4) of the second housing part 202 may be configured to support at least a portion of at least a portion (e.g., the first area A1 of FIG. 4) of the display 203 (e.g., the display 203 of FIGS. 2 to 3, or the display 231 of FIGS. 4 to 5B).

According to an embodiment, the display 203 may include a first area (e.g., the first area A1 of FIG. 4) positioned on the first surface (e.g., the first surface F1 of FIG. 4) of the second cover member 221, or a second area (e.g., the second area A2 of FIG. 4) extending from the first area. The second area may be supported by the multi-bar 301 and may move while being guided by the guide rail 250 (e.g., the guide rail 250 of FIG. 4). The display 203 may be referred to as a flexible display.

According to an embodiment, the display assembly 300 may be configured to protect the display 203. According to an embodiment, the display assembly 300 may be defined and/or interpreted as including the display 203 and components for protecting the display 203. For example, the display assembly 300 may be configured to protect the outer surface (e.g., the surface facing the outside of the electronic device 101) of the display 203 (or the display panel), or to protect the edge of the display 203. According to an embodiment, the display assembly 300 may be defined and/or interpreted as a structure configured to restrict and/or reduce the display 203 from being detached or separated from the multi-bar 301 when an external impact is applied to the electronic device 101 (e.g., in a drop situation).

According to an embodiment, the display assembly 300 may include a multi-bar 301 (e.g., the multi-bar 232 of FIG. 4), a protective layer 330, or a support plate 340. For example, the display assembly 300 may be defined and/or interpreted as including the display 203 and components 301, 330, 340 configured to protect and/or support the display 203. The display assembly 300 may be defined and/or referred to as a display protection structure for protecting the display 203 and/or a display support structure for supporting the display 203.

According to an embodiment, the multi-bar 301 may include a plurality of bars. The plurality of bars may be arranged in parallel with each other. Each of the plurality of bars may be spaced apart from an adjacent bar.

According to an embodiment, a first bar 310 among the plurality of bars may be arranged in parallel with a second bar 320 adjacent to the first bar 310 among the plurality of bars. The first bar 310 may be spaced apart from the second bar 320. Hereinafter, the description of the first bar 310 and the second bar 320 disclosed in the present specification may be equally applied and/or understood to a pair of bars adjacent to each other.

According to an embodiment, the plurality of bars of the multi-bar 301 may be connected or attached to the second area of the display 203. As the second housing part 202 slide-moves with respect to the first housing part, the plurality of bars of the multi-bar 301 may move with respect to the first housing part along the slit (e.g., the slit 251 of FIG. 4) of the guide rail 250.

According to an embodiment, the protective layer 330 may be disposed on the outer surface of the display 203. For example, the protective layer 330 may be stacked on the outer surface of the display 203. The protective layer 330 may cover the display 203 so that the outer surface of the display 203 is not exposed to the outside of the electronic device 101. As the outer surface of the display 203 is protected by the protective layer 330, the occurrence of scratches or damage on the display 203 may be restricted and/or reduced. The protective layer 330 may include a thin and transparent film or a bendable glass, but is not limited thereto.

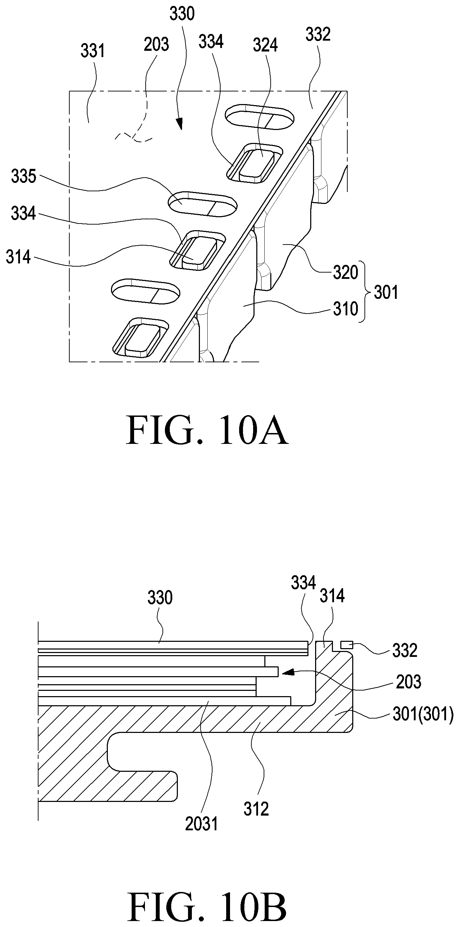

According to an embodiment, at least a portion (e.g., the extended portion 332 of FIG. 10A) of the protective layer 330 may be disposed between the support plate 340 and the plurality of bars. For example, at least a portion (e.g., the extended portion 332 of FIG. 10A) of the protective layer 330 may be disposed between the support plate 340 and the plurality of bars in a direction (e.g., the Z-axis direction of FIGS. 6 to 7) perpendicular to the direction in which the second housing part 202 slide-moves with respect to the first housing part.

According to an embodiment, the support plate 340 may be arranged to cover the edge of the protective layer 330 or at least a portion (e.g., the extended portion 332 of FIG. 10A) of the protective layer 330. The support plate 340 may include a bendable material. For example, the support plate 340 may include at least one of stainless steel, copper (Cu), aluminum (Al), or a polymer sheet. The support plate 340 may include a plurality of openings. For example, the support plate 340 may be defined and/or referred to as a lattice plate on which a lattice pattern including a plurality of openings providing flexibility to the support plate 340 is formed. The plurality of openings may be configured to provide flexibility to the support plate 340, or may be configured to provide a space capable of accommodating a portion of the multi-bar 301.

According to an embodiment, a portion of the support plate 340 may be fixed to the plurality of bars of the multi-bar 301. Accordingly, the protective layer 330 disposed between the plurality of bars and the support plate 340 may be restricted and/or reduced from being detached or separated between the plurality of bars and the support plate 340 when an external impact is applied to the electronic device 101.

According to an embodiment, the support plate 340 may have a length that is disposed over the entire area of the edge of the second area (e.g., the second area A2 of FIG. 4) of the display 203, but is not limited thereto, and may have a length that is disposed only over a partial area of the edge of the second area.

FIG. 8 is a perspective view illustrating one bar of a multi-bar, according to an embodiment of the disclosure.

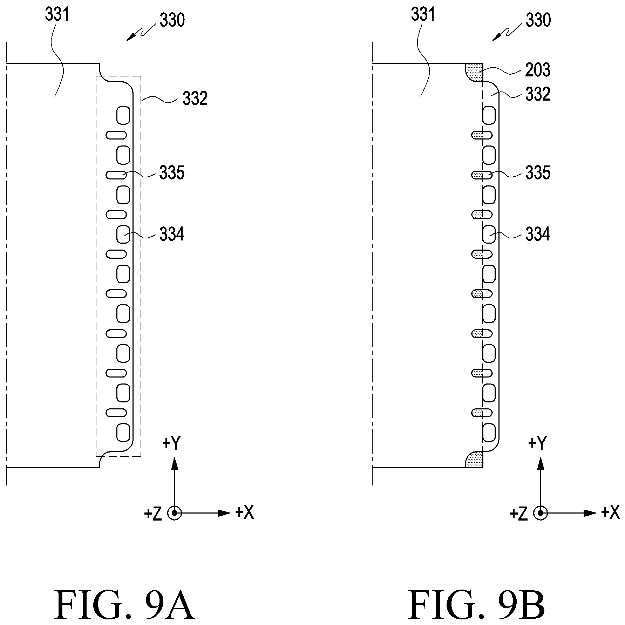

The embodiment of FIG. 8 may be combined with the embodiments of FIGS. 1 to 7 or the embodiments of FIGS. 9A to 24.

Referring to FIG. 8, one bar 301a among the plurality of bars of the multi-bar 301 (e.g., the multi-bar 301 of FIG. 6) is illustrated.

The description of any one bar 301a described with FIG. 8 as an example may be equally applied and/or understood to other bars of the multi-bar 301.

According to an embodiment, the bar 301a may include a support portion 302, a cover portion 303, a fixing portion 304, or a pole portion 305.

According to an embodiment, the support portion 302 may be configured to support the inner surface (e.g., the surface facing the inside of the electronic device) of the display (e.g., the display 203 of FIGS. 6 to 7). The support portion 302 may have a shape of an elongated rod, but is not limited thereto. The support portion 302 may extend in a direction (e.g., the X-axis direction of FIG. 4 or the X-axis direction of FIG. 8) perpendicular to the direction in which the second housing part moves relative to the first housing part, but is not limited thereto.

According to an embodiment, the cover portion 303 may be disposed at both ends of the support portion 302. The cover portion 303 may cover the lateral surface of the display or the edge of the display. The cover portion 303 may be spaced apart from the lateral surface of the display or the edge of the display, but is not limited thereto. The cover portion 303 may be arranged substantially perpendicular to the support portion 302, but is not limited thereto.

According to an embodiment, the fixing portion 304 may protrude from at least a portion of the bar 301a. For example, referring to the P3 box of FIG. 8, the fixing portion 304 may protrude from the cover portion 303. The fixing portion 304 may be defined and/or referred to as a protrusion. The fixing portion 304 may be integrally formed with the cover portion 303, but is not limited thereto.

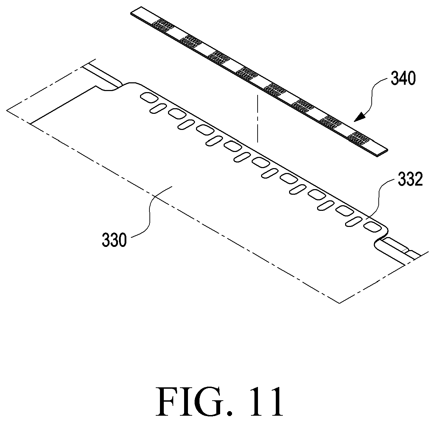

According to an embodiment, the fixing portion 304 may be accommodated in a first opening (e.g., the first opening 334 of FIG. 9A) of the protective layer (e.g., the protective layer 330 of FIG. 9A). The fixing portion 304 may be coupled to or fixed to the support plate (e.g., the support plate 340 of FIG. 11).

According to an embodiment, the pole portion 305 may be disposed on the support portion 302. For example, the pole portion 305 may be disposed adjacent to both ends of the support portion 302 and disposed at a lower portion of the support portion 302. For example, the pole portion 305 may be disposed below (e.g., in the -Z direction of FIG. 8) the support portion 302, and the cover portion 303 may be disposed above (e.g., in the +Z direction of FIG. 8) the support portion 302.

According to an embodiment, the pole portion 305 may be disposed in the slit (e.g., the slit 251 of FIG. 4) of the guide rail (e.g., the guide rail 250 of FIG. 4). When the multi-bar 301 moves, the pole portion 305 may move along the slit.

FIG. 9A is a plan view illustrating a protective layer, according to an embodiment of the disclosure. FIG. 9B is a plan view illustrating a state in which a protective layer is stacked on a display, according to an embodiment of the disclosure.

The embodiments of FIGS. 9A and 9B may be combined with the embodiments of FIGS. 1 to 8 or the embodiments of FIGS. 10A to 24.

Referring to FIGS. 9A and 9B, the protective layer 330 may include a base portion 331 or an extended portion 332.

According to an embodiment, the base portion 331 may generally cover the outer surface of the display 203. The base portion 331 may have a size and/or shape substantially corresponding to the outer surface of the display 203, but is not limited thereto.

According to an embodiment, the extended portion 332 may extend from the base portion 331. The fact that the extended portion 332 extends from the base portion 331 may be defined and/or interpreted as extending to a sufficient size or length such that the first opening 334 and/or the second opening 335 described below is formed in the extended portion 332.

According to an embodiment, the extended portion 332 may be defined and/or interpreted as a partial configuration of the base portion 331.

According to an embodiment, the protective layer 330 may include a first opening 334 formed in the extended portion 332. The first opening 334 may be provided in plurality. The plurality of first openings 334 may be spaced apart from each other. According to an embodiment, the first opening 334 may be a hole formed in the protective layer 330, but is not limited thereto. The first opening 334 may be disposed adjacent to the edge of the protective layer 330 (e.g., the edge of the extended portion 332), but is not limited thereto. For example, when viewed from the front of the display 203, the first opening 334 may be at least partially overlapped with a black matrix area (BM area) of the display 203. The first opening 334 may be disposed outside the display area of the display 203. The first opening 334 may be disposed in an area not overlapping with the display area of the display 203.

According to an embodiment, the fixing portion (e.g., the fixing portion 304 of FIG. 8) of the multi-bar (e.g., the multi-bar 301 of FIG. 8) may be accommodated in the first opening 334.

According to an embodiment, the protective layer 330 may include a second opening 335 formed in the extended portion 332. The second opening 335 may be provided in plurality. The plurality of second openings 335 may be spaced apart from each other. The plurality of second openings 335 may be arranged alternately with the plurality of first openings 334.

According to an embodiment, the second opening 335 may be configured to provide flexibility to the protective layer 330. The second opening 335 may be a hole formed in the protective layer 330, but is not limited thereto. For example, the second opening 335 may include a slit, a groove, or a recess formed in the protective layer 330.

According to an embodiment, in a state (e.g., FIG. 9B) in which the protective layer 330 is stacked on the display 203, the first opening 334 may not overlap with the display 203. In a state (e.g., FIG. 9B) in which the protective layer 330 is stacked on the display 203, the second opening 335 may be at least partially overlapped with the display 203. According to an embodiment, the second opening 335 may be entirely overlapped with the display 203. For example, when viewed from the front of the display 203, the second opening 335 may be at least partially disposed to be overlapped with the black matrix area (BM area) of the display 203.

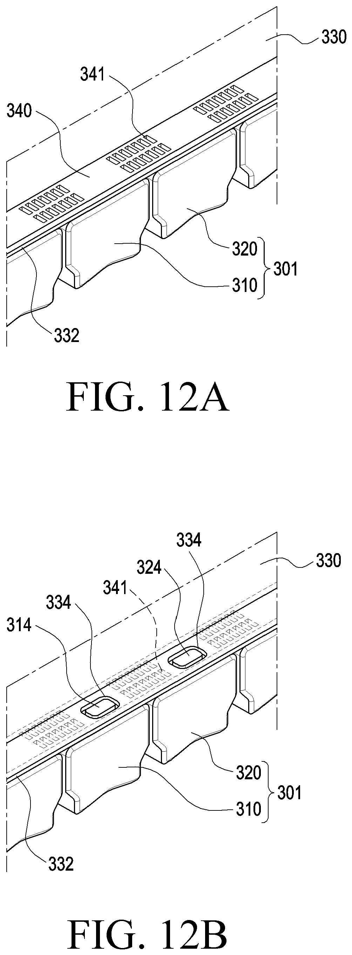

FIG. 10A is a perspective view illustrating a multi-bar, a display, and a protective layer, according to an embodiment of the disclosure. FIG. 10B is a cross-sectional view illustrating a multi-bar, a display, and a protective layer, according to an embodiment of the disclosure. FIG. 11 is a perspective view illustrating a support plate and a protective layer, according to an embodiment of the disclosure. FIG. 12A is a perspective view illustrating a multi-bar, a support plate, and a protective layer, according to an embodiment of the disclosure. FIG. 12B is a perspective view illustrating a multi-bar, a support plate, and a protective layer, according to an embodiment of the disclosure.

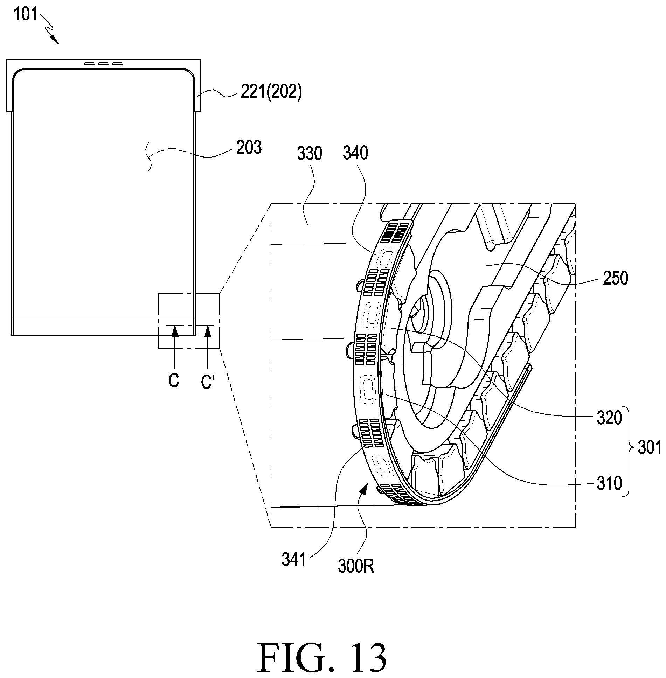

The embodiments of FIGS. 10A to 12B may be combined with the embodiments of FIGS. 1 to 9B or the embodiments of FIGS. 13 to 24.

Referring to FIG. 10A, a state in which the protective layer 330 is coupled to or disposed on the multi-bar 301 is illustrated.

According to an embodiment, the protective layer 330 may include a base portion 331 or an extended portion 332.

According to an embodiment, the multi-bar 301 may include a plurality of bars. For example, the multi-bar 301 may include a first bar 310 and a second bar 320 disposed adjacent to the first bar 310.

According to an embodiment, the first bar 310 may include a first fixing portion 314 (e.g., the fixing portion 304 of FIG. 8). The second bar 320 may include a second fixing portion 324 (e.g., the fixing portion 304 of FIG. 8).

According to an embodiment, when the protective layer 330 is coupled to the multi-bar 301, the plurality of first openings 334 of the protective layer 330 may accommodate the fixing portions 314, 324. For example, the first fixing portion 314 may be accommodated in one first opening 334, and the second fixing portion 324 may be accommodated in another first opening 334 adjacent to the one first opening 334. A state in which the fixing portions 314, 324 are accommodated in the first openings 334 may be defined and/or interpreted as a state in which the fixing portions 314, 324 are inserted in the first openings 334, mounted in the first openings 334, or surrounded by the first openings 334.

According to an embodiment, the second opening 335 may be positioned between the first bar 310 and the second bar 320. The second opening 335 may be positioned between the first fixing portion 314 and the second fixing portion 324.

Referring to FIG. 10B, a cross-sectional view taken based on the first bar 310 is illustrated.

According to an embodiment, the protective layer 330 may be arranged to protect the outer surface of the display 203. For example, the protective layer 330 may cover the outer surface of the display 203.

According to an embodiment, the display 203 may be coupled to the support portion 312 (e.g., the support portion 302 of FIG. 8) of the first bar 310 through an adhesive layer 2031. The adhesive layer 2031 may include a double-sided tape, a bond, or a pressure sensitive adhesive (PSA), but is not limited thereto.

According to an embodiment, the first fixing portion 314 of the first bar 310 may be accommodated in the first opening 334 formed in the extended portion 332 of the protective layer 330.

Referring to FIG. 11, a state before the support plate 340 is stacked on the protective layer 330 is illustrated. Referring to FIG. 12A, a state in which the support plate 340 is stacked on the protective layer 330 is illustrated. Referring to FIG. 12B, for convenience of description, a state in which a portion of the support plate 340 is cut away is illustrated.

Referring to FIGS. 11 to 12B, the support plate 340 may be disposed on or seated on the extended portion 332 of the protective layer 330.

According to an embodiment, the support plate 340 may be coupled to the fixing portions 314, 324 of the multi-bar 301. For example, the fixing portions 314, 324 may be welded to the support plate 340. According to embodiments, the coupling between the fixing portions 314, 324 and the support plate 340 may be provided through an adhesive and/or a double-sided tape.

According to an embodiment, the support plate 340 may include a lattice pattern 341. The lattice pattern 341 may provide flexibility to the support plate 340. The lattice pattern 341 may include a plurality of holes, a plurality of grooves, or a plurality of slits, but is not limited thereto. The elements of the lattice pattern 341 may be dense with each other, but are not limited thereto. The lattice pattern 341 may be provided in plurality.

According to an embodiment, the lattice pattern 341 may be positioned between the first bar 310 and the second bar 320. The lattice pattern 341 may be positioned between the first fixing portion 314 and the second fixing portion 324.

According to an embodiment, when the support plate 340 is coupled to the extended portion 332 of the protective layer 330, the lattice pattern 341 of the support plate 340 may overlap with the second opening (e.g., the second opening 335 of FIG. 10A) of the protective layer 330.

According to an embodiment, the fixing portions 314, 324 may pass through the first openings 334 of the extended portion 332 and may contact and be coupled to the support plate 340.

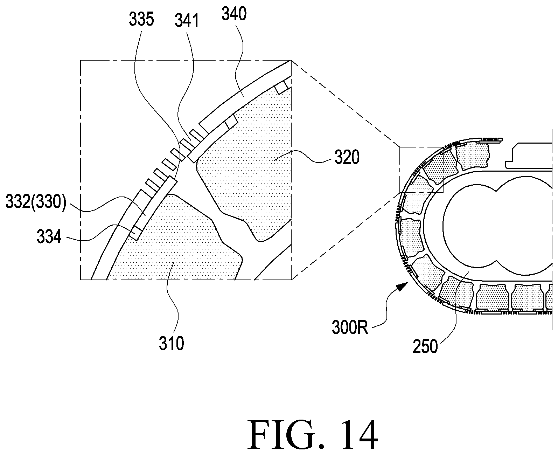

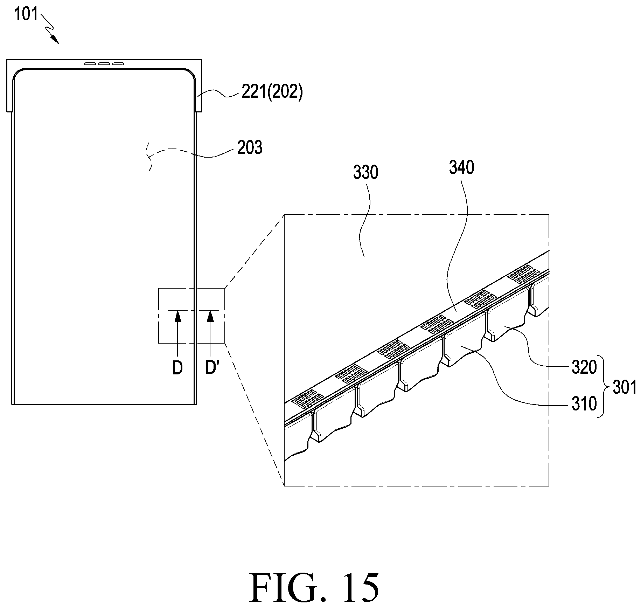

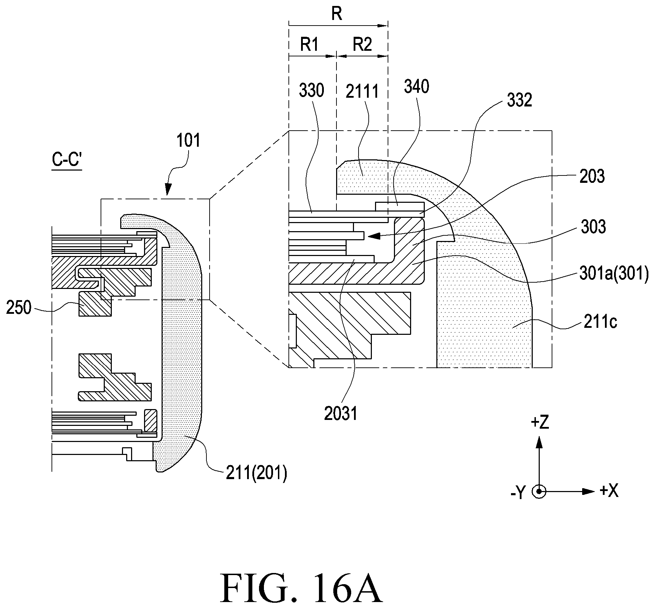

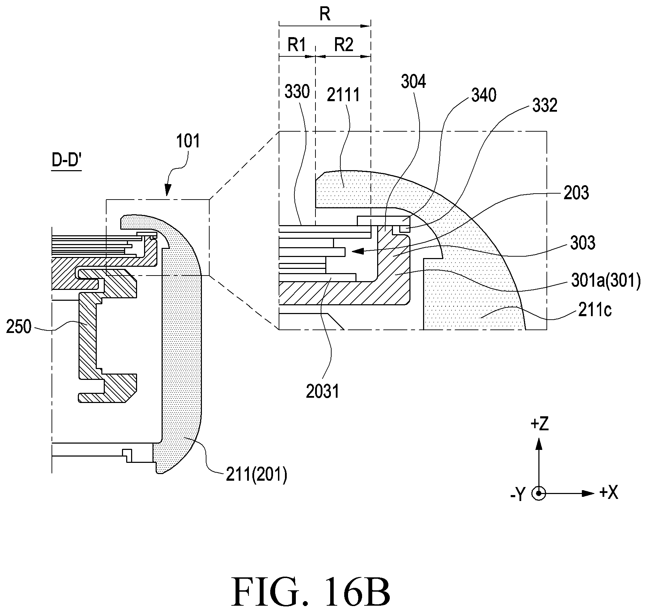

FIG. 13 is a view illustrating an electronic device in a slide-in state, according to an embodiment of the disclosure. FIG. 14 is a cross-sectional view illustrating a display assembly, according to an embodiment of the disclosure. FIG. 15 is a view illustrating an electronic device in a slide-out state, according to an embodiment of the disclosure. FIG. 16A is a cross-sectional view taken along line C-C' of FIG. 13, according to an embodiment of the disclosure. FIG. 16B is a cross-sectional view taken along line D-D' of FIG. 15, according to an embodiment of the disclosure.

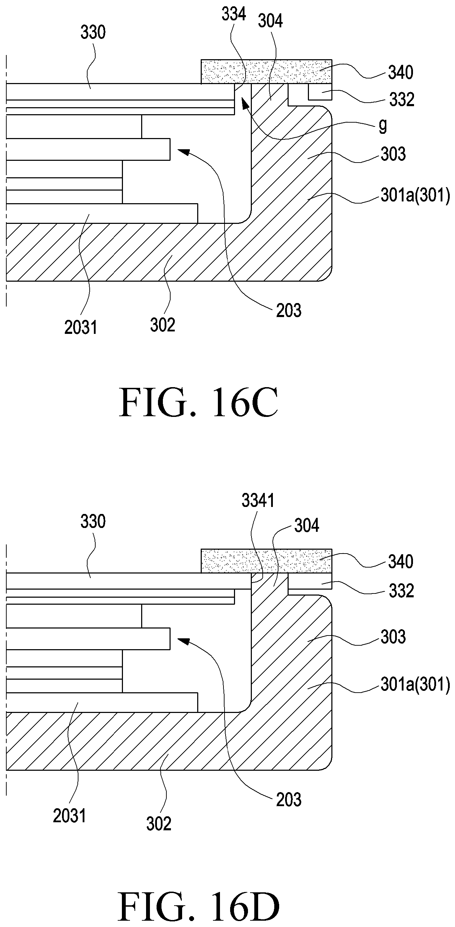

The embodiments of FIGS. 13 to 16B may be combined with the embodiments of FIGS. 1 to 12B or the embodiments of FIGS. 16C to 24.

Referring to FIGS. 13 and 14, a second housing part 202 including a second cover member 221, and a display 203 at least partially supported by the second cover member 221 are illustrated.

According to an embodiment, the outer surface of the display 203 may be covered by the protective layer 330.

According to an embodiment, the display 203 and the display assembly (e.g., the display assembly 300 of FIG. 6) may be configured to move along the guide rail 250.

According to an embodiment, at a position corresponding to the curved surface (e.g., the curved surface 213a of FIG. 4) of the frame (e.g., the frame 213 of FIG. 4), the display assembly (e.g., the display assembly 300 of FIG. 6) may be arranged in a curved shape 300R. For example, the plurality of bars 310, 320 of the multi-bar 301 may be supported by the curved surface and arranged in a curved shape. At least a portion of the display 203 supported by the plurality of bars 310, 320 may also be arranged in a curved shape. As at least a portion of the display 203 is arranged in a curved shape, at least a portion of the protective layer 330 may be arranged in a curved shape. As the protective layer 330 and the plurality of bars 310, 320 are arranged in a curved shape, the support plate 340 disposed on the extended portion 332 of the protective layer 330 may be arranged in a curved shape.

Referring to FIG. 14, the second opening 335 formed in the extended portion 332 of the protective layer 330 may be positioned between the first bar 310 and the second bar 320. The lattice pattern 341 of the support plate 340 may be positioned between the first bar 310 and the second bar 320. The lattice pattern 341 may overlap with the second opening 335.

FIG. 16A illustrates a cross-sectional view of the electronic device 101 taken along line C-C' of FIG. 13. FIG. 16A is a cross-sectional view taken along a portion of any one bar 310a (e.g., the first bar 310 or the second bar 320 of FIGS. 13 to 14) where there is no fixing portion.

Referring to FIG. 16A, a first housing part (e.g., the first housing part 201 of FIG. 2) including a first cover member (e.g., the first cover member 211 of FIG. 2) is illustrated. The lateral surface (e.g., the surface facing the +X direction of FIG. 16A) of the display 203 may be spaced apart from the cover portion 303 of the bar 301a.

According to an embodiment, the first cover member 211 may include a 1-3 side wall (e.g., the 1-3 side wall 211c of FIG. 2). The 1-3 side wall 211c may include a bezel 2111 covering an upper portion of the edge of the display 203. The bezel 2111 may cover the support plate 340.

According to an embodiment, the support plate 340 may be covered by the bezel 2111 such that it is not visually shown from the front (e.g., the surface facing the +Z direction of FIG. 16A) of the electronic device 101. The support plate 340 may not be positioned in an active area R1 of the entire area R of the display 203. The active area R1 may be defined as an area of the entire area R of the display 203 in which display pixels are activated during operation of the display 203 and visual images or information are actually displayed. For example, the support plate 340 may be positioned in a non-active area R2 of the entire area R of the display 203. The non-active area R2 may be defined as an area of the entire area R of the display 203 in which visual images or information are not actually displayed during operation of the display 203.

Referring to FIG. 15, a state in which the display assembly (e.g., the display assembly 300 of FIG. 6) is arranged in a line is illustrated. For example, as the first bar 310 and the second bar 320 are arranged in a line, the protective layer 330 and the support plate 340 may be arranged in a line.

FIG. 16B illustrates a cross-sectional view of the electronic device 101 taken along line D-D' of FIG. 15. FIG. 16B is a cross-sectional view taken along a portion of any one bar 310a (e.g., the first bar 310 or the second bar 320 of FIG. 15) where there is a fixing portion.

Referring to FIG. 16B, a first housing part (e.g., the first housing part 201 of FIG. 2) including a first cover member (e.g., the first cover member 211 of FIG. 2) is illustrated. The lateral surface (e.g., the surface facing the +X direction of FIG. 16A) of the display 203 may be spaced apart from the cover portion 303 of the bar 301a.

According to an embodiment, the support plate 340 may be covered by the bezel 2111 such that it is not visually shown from the front (e.g., the surface facing the +Z direction of FIG. 16A) of the electronic device 101. The support plate 340 may not be positioned in the active area R1 of the entire area R of the display 203. For example, the support plate 340 may be positioned in the non-active area R2 of the entire area R of the display 203.

Referring to FIGS. 16A and 16B, the support plate 340 may be covered by the bezel 2111 and not visually exposed to the outside of the electronic device 101 when the state of the electronic device 101 is the slide-in state (e.g., FIG. 2, or FIG. 5A) or the slide-out state (e.g., FIG. 3, or FIG. 5B).

When the electronic device 101 is dropped in the slide-out state, external impact may be applied to the electronic device 101. The state of the electronic device 101 may rapidly change from the slide-out state to the slide-in state, and the multi-bar 301 may rapidly move along the guide rail 250. For example, as the multi-bar 301 rapidly moves, the display 203 supported by the multi-bar 301 may be deformed into a curved shape on the curved surface (e.g., the curved surface 213a of FIG. 4). For example, a force may act on the display 203 in a direction in which it is separated or detached from the multi-bar 301.

According to an embodiment, the extended portion 332 of the protective layer 330 may accommodate the fixing portion 304 of the bar 301a and may be covered by the support plate 340. Accordingly, the extended portion 332 of the protective layer 330 may be positioned between the support plate 340 and the cover portion 303. As the extended portion 332 is positioned between the support plate 340 and the cover portion 303, the protective layer 330 may be fixed to the bar 301a such that it does not detach from the fixing portion 304. Accordingly, when an external impact is applied to the electronic device 101, the protective layer 330 may restrict and/or prevent the display 203 from being separated or detached from the multi-bar 301. For example, the protective layer 330 may restrict and/or prevent the display 203 from lifting off from the multi-bar 301. As lifting of the display 203 from the multi-bar 301 is restricted and/or prevented, the occurrence of excessive deformation or excessive compression in a partial area of the display 203 may be restricted and/or prevented. Accordingly, damage or cracks in the display 203 may be prevented and/or reduced.

FIG. 16C is a cross-sectional view illustrating a display assembly, according to an embodiment of the disclosure. FIG. 16D is a cross-sectional view illustrating a display assembly, according to an embodiment of the disclosure.

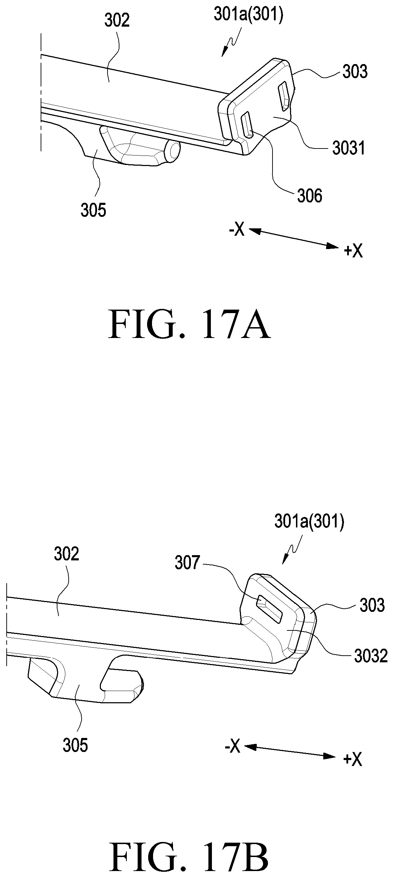

The embodiments of FIGS. 16C to 16D may be combined with the embodiments of FIGS. 1 to 16B or the embodiments of FIGS. 17 to 24.

Referring to FIGS. 16C and 16D, any one bar 301a of the multi-bar 301 may include a support portion 302, a cover portion 303, or a fixing portion 304.

According to an embodiment, the display 203 may be adhered to the support portion 302 through an adhesive layer 2031. According to an embodiment, the cover portion 303 may be spaced apart from the edge or lateral surface of the display 203.

According to an embodiment, the fixing portion 304 of the bar 301a may be accommodated in the first opening 334, 3341 formed in the extended portion 332 of the protective layer 330 and may contact and be coupled to the support plate 340. The fixing portion 304 may be surrounded by the extended portion 332 defining the first opening 334, 3341.

According to an embodiment, the size of the first opening 334, 3341 may have a sufficient size to accommodate the fixing portion 304.

According to an embodiment (e.g., FIG. 16C), the size of the first opening 334 may be larger than the size of the fixing portion 304. Accordingly, a gap g may be formed between the extended portion 332 defining the first opening 334 and the fixing portion 304.

According to an embodiment (e.g., FIG. 16D), the size of the first opening 3341 may be substantially the same as the size of the fixing portion 304. Accordingly, no gap may be formed between the extended portion 332 defining the first opening 3341 and the fixing portion 304. For example, the fixing portion 304 may be in close contact with the inner rim of the extended portion 332 defining the first opening 3341.

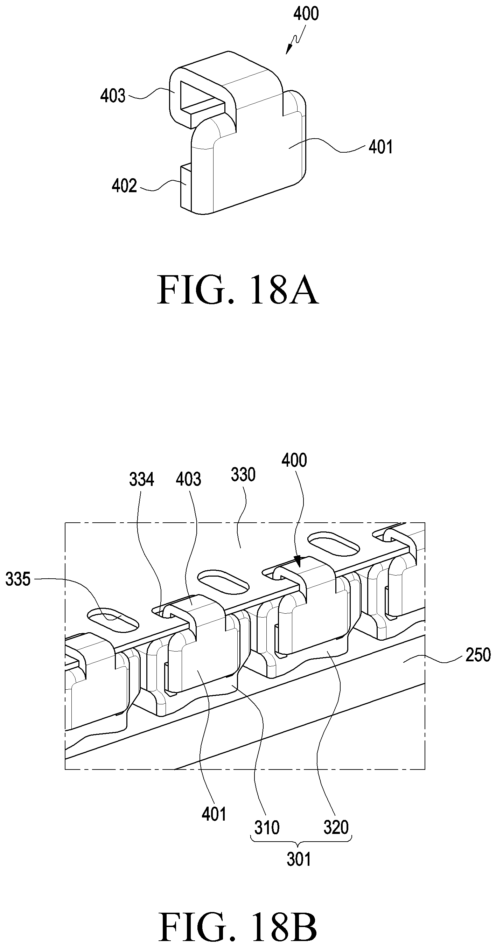

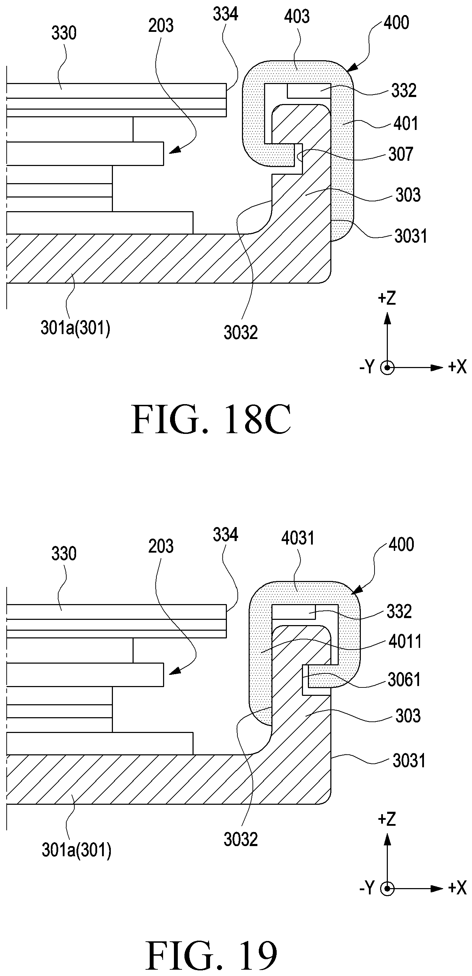

FIG. 17A is a view illustrating one bar of a plurality of bars, according to an embodiment of the disclosure. FIG. 17B is a view illustrating one bar of a plurality of bars, according to an embodiment of the disclosure. FIG. 18A is a perspective view illustrating a fixing portion, according to an embodiment of the disclosure. FIG. 18B is a perspective view illustrating a multi-bar, a protective layer, and a fixing portion, according to an embodiment of the disclosure. FIG. 18C is a cross-sectional view illustrating a multi-bar, a protective layer, and a fixing portion, according to an embodiment of the disclosure. FIG. 19 is a cross-sectional view illustrating a multi-bar, a protective layer, and a fixing portion, according to an embodiment of the disclosure.

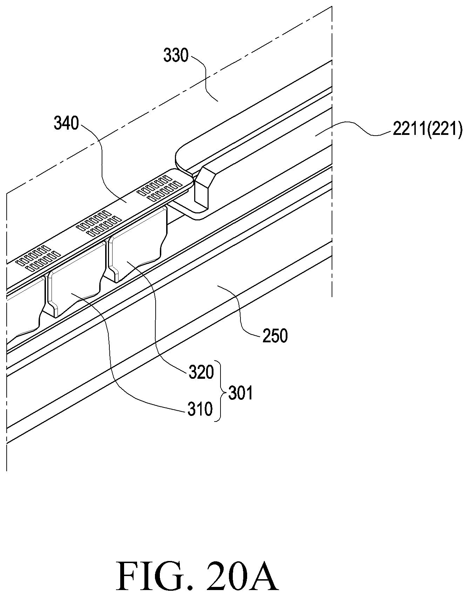

The embodiments of FIGS. 17A to 19 may be combined with the embodiments of FIGS. 1 to 16D or the embodiments of FIGS. 20A to 24.

Referring to FIGS. 17A and 17B, any one bar 301a among the plurality of bars of the multi-bar 301 (e.g., the multi-bar 301 of FIG. 6) is illustrated.

The description of any one bar 301a described with FIGS. 17A and 17B as an example may be equally applied and/or understood to other bars of the multi-bar 301.

According to an embodiment, the bar 301a may include a support portion (e.g., the support portion 302 of FIG. 8), a cover portion 303 (e.g., the cover portion 303 of FIG. 8), or a pole portion 305 (e.g., the pole portion 305 of FIG. 8).

According to an embodiment, the cover portion 303 may include an inner surface 3032 facing the display (e.g., the display 203 of FIG. 18C), and an outer surface 3031 facing a direction opposite to the inner surface 3032. The outer surface 3031 may be referred to as a first surface 3031, and the inner surface 3032 may be referred to as a second surface 3032.

According to an embodiment, a first groove 306 may be formed on the first surface 3031 of the cover portion 303. A second groove 307 may be formed on the second surface 3032 of the cover portion 303.

According to an embodiment, the multi-bar 301 may include a fixing portion (e.g., the fixing portion 400 of FIG. 18A).

Referring to FIGS. 18A, 18B, and 18C, the fixing portion 400 of the multi-bar 301 may be coupled to the plurality of bars 310, 320. The fixing portions 400 of the multi-bar 301 may be provided in plurality. The fixing portion 400 may, according to embodiments, be interpreted as a separate configuration from the multi-bar 301. For example, the fixing portion 400 may be manufactured as a separate member from the multi-bar 301 and assembled to the multi-bar 301.

According to an embodiment, the fixing portion 400 may include a planar portion 401, a first insertion portion 402, or a second insertion portion 403.

According to an embodiment, the planar portion 401 may be disposed on the first surface (e.g., the first surface 3031 of FIG. 17A) of the cover portion (e.g., the cover portion 303 of FIGS. 17A and 17B) of the plurality of bars 310, 320.

According to an embodiment, the first insertion portion 402 may extend from the planar portion 401 and may be inserted into the first groove (e.g., the first groove 306 of FIG. 17A) of the plurality of bars 310, 320.

According to an embodiment, the second insertion portion 403 may extend from the planar portion 401 and may be at least partially inserted into the first opening 334. The second insertion portion 403 may be inserted into the second groove 307 of the plurality of bars 310, 320. The second insertion portion 403 may have a shape bent at least one or more times, but is not limited thereto.

According to an embodiment, the fixing portion 400 may have a structure that passes through the first opening 334 formed in the extended portion 332 and is fixed to the second groove 307 such that the protective layer 330 and the display 203 are not detached or separated from the multi-bar 301.

Referring to FIG. 19, the fixing portion 400 may include a planar portion 4011, a first insertion portion (not illustrated), or a second insertion portion 4031.

According to an embodiment, the planar portion 4011 may be disposed on the second surface 3032 of the cover portion 303 of the plurality of bars 310, 320. According to an embodiment, the planar portion 4011 may be at least partially disposed in the first opening 334.

According to an embodiment, the first insertion portion (not illustrated) may extend from the planar portion 4011 and may be inserted into the second groove (e.g., the second groove 307 of FIG. 17B) formed on the second surface 3032 of the plurality of bars 310, 320.

According to an embodiment, the second insertion portion 4031 may extend from the planar portion 4011. The second insertion portion 403 may be inserted into the first groove 3061 (e.g., the first groove 306 of FIG. 17A) formed on the first surface 3031 of the plurality of bars 310, 320. The second insertion portion 4031 may have a shape bent at least one or more times, but is not limited thereto.

According to an embodiment, the fixing portion 400 may have a structure that passes through the first opening 334 formed in the extended portion 332 and is fixed to the first groove 3061 such that the protective layer 330 and the display 203 are not detached or separated from the multi-bar 301.

Referring to FIGS. 18A to 19, the fixing portion 400 may be a clip type member detachable from the multi-bar 301, but is not limited thereto.

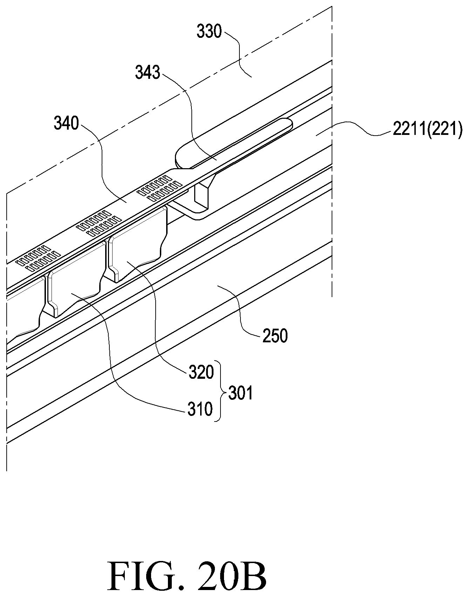

FIG. 20A is a perspective view illustrating a display assembly, according to an embodiment of the disclosure. FIG. 20B is a perspective view illustrating a display assembly, according to an embodiment of the disclosure.

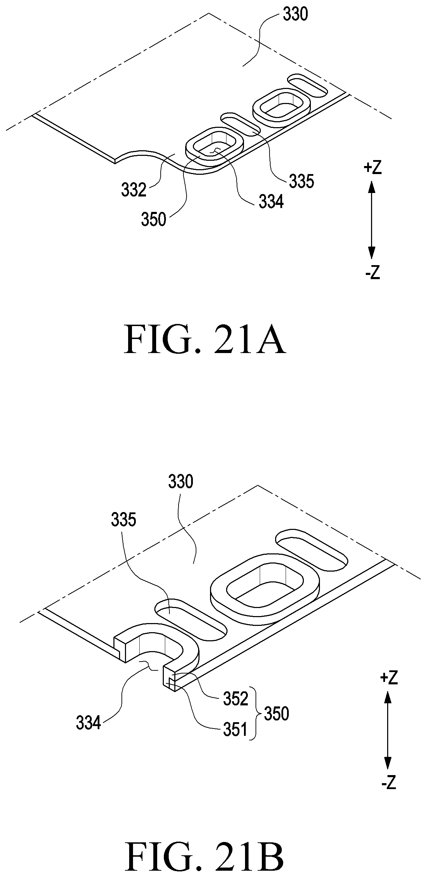

The embodiments of FIGS. 20A and 20B may be combined with the embodiments of FIGS. 1 to 19 or the embodiments of FIGS. 21A to 24.

Referring to FIGS. 20A and 20B, a support plate 340 stacked on the multi-bar 301 is illustrated.

Referring to FIG. 20A, the support plate 340 may not be coupled to a portion 2211 of the second cover member 221. The portion 2211 of the second cover member 221 may be defined as an edge of the first surface (e.g., the first surface F1 of FIG. 4) of the second cover member 221, but is not limited thereto.

Referring to FIG. 20B, the support plate 340 may include a coupling portion 343 coupled to a portion 2211 of the second cover member 221. For example, the coupling portion 343 may extend from an end of the support plate 340 and overlap with a portion of the second cover member 221. The coupling portion 343 may be welded to the portion 2211 of the second cover member 221, but is not limited thereto. According to embodiments, the coupling portion 343 may be coupled to the portion 2211 of the second cover member 221 through a fastening member such as a screw.

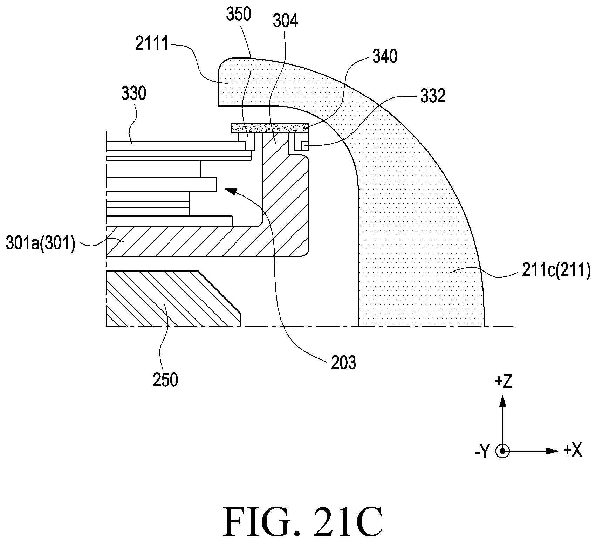

FIG. 21A is a view illustrating a protective layer and a first reinforcing member, according to an embodiment of the disclosure. FIG. 21B is a view illustrating a protective layer and a first reinforcing member, according to an embodiment of the disclosure. FIG. 21C is a cross-sectional view illustrating a multi-bar, a protective layer, and a first reinforcing member, according to an embodiment of the disclosure.

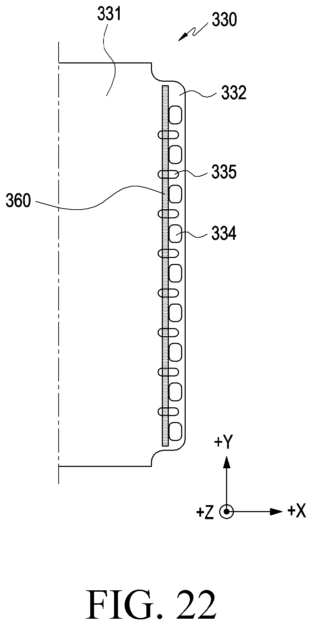

The embodiments of FIGS. 21A to 21C may be combined with the embodiments of FIGS. 1 to 20B or the embodiments of FIGS. 22 to 24.

According to an embodiment, the display assembly (e.g., the display assembly 300 of FIG. 6) may include a first reinforcing member 350. The first reinforcing member 350 may be disposed in the first opening 334 formed in the extended portion 332 of the protective layer 330.

According to an embodiment, the first reinforcing member 350 may have an overall loop shape. An opening may be formed inside the first reinforcing member 350.

According to an embodiment, the first reinforcing member 350 may be at least partially inserted into or coupled to the first opening 334.

According to an embodiment, the first reinforcing member 350 may include a first reinforcing portion 351 and a second reinforcing portion 352. The first reinforcing portion 351 may be inserted into the first opening 334 and disposed on the same plane as the protective layer 330. The second reinforcing portion 352 may extend from the first reinforcing portion 351. The second reinforcing portion 352 may be disposed on an upper surface of the extended portion 332 (e.g., a surface facing the +Z direction in FIGS. 21A to 21C).

According to an embodiment, the fixing portion 304 may be disposed inside the first reinforcing member 350. According to an embodiment, the first reinforcing member 350 may restrict and/or reduce the occurrence of cracks or damage at the inner rim of the extended portion 332 defining the first opening 334.

According to an embodiment, the first reinforcing member 350 may include a film material, a metal material, or a coating material, but is not limited thereto. The first reinforcing member 350 may include various materials capable of restricting and/or reducing damage to the inner rim of the extended portion 332 defining the first opening 334.

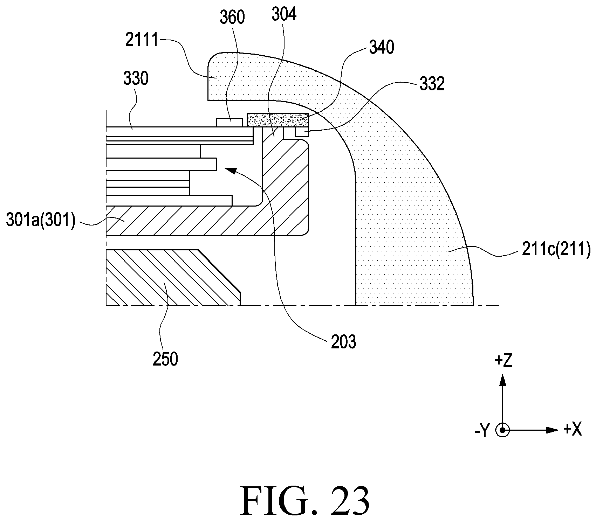

FIG. 22 is a view illustrating a protective layer and a second reinforcing member, according to an embodiment of the disclosure. FIG. 23 is a cross-sectional view illustrating a multi-bar, a protective layer, and a second reinforcing member, according to an embodiment of the disclosure.

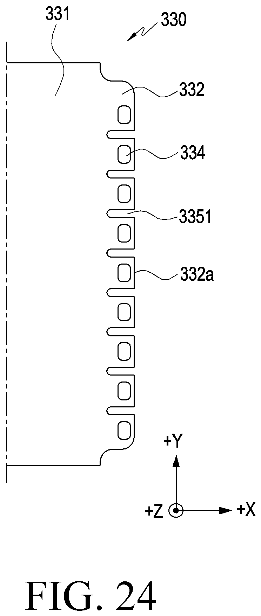

The embodiments of FIGS. 22 to 23 may be combined with the embodiments of FIGS. 1 to 21C or the embodiment of FIG. 24.

Referring to FIGS. 22 to 23, the display assembly (e.g., the display assembly 300 of FIG. 6) may include a second reinforcing member 360.

According to an embodiment, the second reinforcing member 360 may be disposed on the extended portion 332 of the protective layer 330. For example, the second reinforcing member 360 may be disposed adjacent to an edge of the protective layer 330 (e.g., the edge facing the +X direction in FIG. 22) and may extend along the edge of the protective layer 330. The second reinforcing member 360 may be provided in an elongated shape, but is not limited thereto.

According to an embodiment, the second reinforcing member 360 may overlap the second opening 335. For example, the second reinforcing member 360 may be arranged to span across a plurality of second openings 335. The second reinforcing member 360 may be arranged to cross a plurality of second openings 335.

According to an embodiment, the second reinforcing member 360 may be disposed adjacent to the first opening 334. The second reinforcing member 360 may not overlap the first opening 334. According to embodiments, the second reinforcing member 360 may at least partially overlap the first opening 334.

According to an embodiment, the second reinforcing member 360 may be a component for restricting and/or reducing damage to the extended portion 332 defining the first opening 334 and/or the second opening 335.

According to an embodiment, the second reinforcing member 360 may include a film material, a metal material, or a coating material, but is not limited thereto. For example, the second reinforcing member 360 may include various materials capable of restricting and/or reducing damage to the extended portion 332 defining the first opening 334 and/or the second opening 335. For example, the second reinforcing member 360 may be a component for dispersing an amount of impact applied to the protective layer 330 when external impact is applied to the electronic device.

Referring to FIG. 23, the second reinforcing member 360 may be disposed on substantially the same plane as the support plate 340.

FIG. 24 is a plan view illustrating a protective layer, according to an embodiment of the disclosure.

The embodiment of FIG. 24 may be combined with the embodiments of FIGS. 1 to 23.

Referring to FIG. 24, the protective layer 330 may include a base portion 331 or an extended portion 332 extending from the base portion 331.

According to an embodiment, the extended portion 332 may include a first opening 334 and a second opening 3351.

According to an embodiment, the first opening 334 may include a hole of a closed shape surrounded by the extended portion 332. The fixing portion 304 of the multi-bar 301 may be accommodated in the first opening 334.

According to an embodiment, the second opening 3351 may include a groove, a slit, or a recess of an opened notch shape that is open up to an edge 332a of the extended portion 332. The second opening 3351 may be a component for providing flexibility to the protective layer 330.

An electronic device including a display may have limitations in implementing a screen larger than the size of the electronic device due to the structure of the fixed display. Accordingly, an electronic device including a rollable display is being researched.

In an electronic device including a rollable display, when a slide operation is implemented, an area of a display region of the display and/or a partial region of the electronic device may be expanded or reduced. At least a portion of the rollable display may be bent or unfolded based on a slide movement operation of the electronic device.

Since the deformable portion of the rollable display is required to be deformed at a high speed when a large impact is applied to the electronic device, excessive stress or external force may be applied thereto. In such a case, the rollable display may be at risk of being separated or detached from a support structure supporting the rollable display.

According to an embodiment of the disclosure, an electronic device capable of restricting and/or reducing excessive deformation or excessive compression of a flexible display through a fastening structure between the flexible display and a peripheral structure may be provided.

According to an embodiment of the disclosure, an electronic device capable of restricting and/or reducing lifting of a flexible display from a multi-bar when external impact is applied to the electronic device may be provided.

However, the technical problem to be solved by the present disclosure is not limited to the above-mentioned problem, and may be variously determined within a range that does not depart from the spirit and scope of the present disclosure.

According to an embodiment of the disclosure, a display assembly capable of restricting and/or reducing excessive deformation and/or excessive compression of a flexible display and an electronic device including the same may be provided.

According to an embodiment of the disclosure, a display assembly capable of preventing and/or restricting damage to a flexible display when external impact is applied to the flexible display and/or the electronic device, and an electronic device including the same may be provided.

The effects obtainable from the present disclosure are not limited to the effects mentioned above, and other effects not mentioned will be clearly understood by those skilled in the art to which the present disclosure pertains from the following description.

According to an embodiment of the disclosure, an electronic device 101 may include a housing 210 including a first housing part 201 and a second housing part 202 configured to move with respect to the first housing part 201.

According to an embodiment, the electronic device 101 may include a flexible display 203 disposed on the housing 210.

According to an embodiment, the electronic device 101 may include a multi-bar 301 configured to support at least a portion of the flexible display 203 and including a plurality of bars.

According to an embodiment, the electronic device 101 may include a protective layer 330 disposed on an outer surface of the flexible display 203, the protective layer 330 including a first opening 334 disposed adjacent to an edge of the protective layer 330.

According to an embodiment, a first bar 310 among the plurality of bars may include a first fixing portion 314, 400 at least partially accommodated in the first opening 334 such that the protective layer 330 is fixed to the first bar 310.

According to an embodiment, the protective layer 330 may further include a second opening 335 disposed between the first bar 310 and a second bar 320 disposed adjacent to the first bar 310.

According to an embodiment, the electronic device 101 may include a plurality of first openings 334.

According to an embodiment, the electronic device 101 may include a plurality of second openings 335.

According to an embodiment, the plurality of first openings 334 and the plurality of second openings 335 may be alternately disposed.

According to an embodiment, the second opening 335 may be disposed between the first fixing portion 314 of the first bar 310 and a second fixing portion 324 of the second bar 320.

According to an embodiment, the electronic device 101 may further include a support plate 340 disposed on the plurality of bars and coupled to the first fixing portion 314 protruding from at least a portion of the first bar 310.

According to an embodiment, the first housing part 201 may include a bezel 2111 covering an edge of the flexible display 203.

According to an embodiment, the support plate 340 may be covered by the bezel 2111 such that the support plate 340 is not visually exposed.

According to an embodiment, the first fixing portion 314 may be welded to the support plate 340.

According to an embodiment, the support plate 340 may have an elongated shape and may include a coupling portion 343 coupled to the second housing part 202.

According to an embodiment, the electronic device 101 may further include a first reinforcing member 350 inserted into the first opening 334.

According to an embodiment, the electronic device 101 may further include a second reinforcing member 360 disposed to span across the second opening 335 of the protective layer 330.

According to an embodiment, the support plate 340 may include a lattice pattern 341 configured to provide flexibility to the support plate 340.

According to an embodiment, the lattice pattern 341 may overlap the second opening 335.

According to an embodiment, the first fixing portion 314 may be integrally formed with the first bar 310.

According to an embodiment, the first fixing portion 400 may be detachably coupled to the first bar 310.

According to an embodiment, the first bar 310 may include an inner surface 3032 facing the flexible display 203 and an outer surface 3031 opposite to the inner surface 3032.

According to an embodiment, the first fixing portion 400 may include a planar portion 401 disposed on the outer surface 3031, a first insertion portion 402 extending from the planar portion 401 and inserted into a first groove 306 formed on the outer surface 3031, and a second insertion portion 403 extending from the planar portion 401, at least partially accommodated in the first opening 334, and inserted into a second groove 307 formed on the inner surface 3032.

According to an embodiment of the disclosure, a display assembly 300 may include a flexible display 203.

According to an embodiment, the display assembly 300 may include a multi-bar 301 configured to support at least a portion of the flexible display 203 and including a plurality of bars.

According to an embodiment, the display assembly 300 may include a protective layer 330 disposed on an outer surface of the flexible display 203, the protective layer 330 including a first opening 334 disposed adjacent to an edge of the protective layer 330.

According to an embodiment, a first bar 310 among the plurality of bars may include a first fixing portion 314, 400 at least partially accommodated in the first opening 334 such that the protective layer 330 is fixed to the first bar 310.

According to an embodiment, the protective layer 330 may include a second opening 3351 disposed between the first bar 310 and a second bar 320 disposed adjacent to the first bar 310.

According to an embodiment, the first opening 334 may include a hole of a closed shape, and the second opening 3351 may include a notch of an opened shape.

According to an embodiment, the protective layer 330 may be a component for restricting the flexible display 203 from being separated from the multi-bar 301.

According to an embodiment, a gap may be formed between the protective layer 330 and the first fixing portion 314.

While specific embodiments have been described in the detailed description of the present document, it will be apparent to those of ordinary skill in the art that various modifications may be made without departing from the scope of the present document.

## Claims

1. An electronic device (101), comprising:
a housing (210) including a first housing part (201) and a second housing part (202) configured to move with respect to the first housing part (201);
a flexible display (203) disposed on the housing (210);
a multi-bar (301) configured to support at least a portion of the flexible display (203) and including a plurality of bars; and
a protective layer (330) disposed on an outer surface of the flexible display (203) and including a first opening (334) disposed adjacent to an edge of the protective layer (330),
wherein a first bar (310) among the plurality of bars includes a first fixing portion (314, 400) at least partially accommodated in the first opening (334) such that the protective layer (330) is fixed to the first bar (310).

2. The electronic device of claim 1, wherein the protective layer (330) further includes a second opening (335) disposed between the first bar (310) and a second bar (320) which is disposed adjacent to the first bar (310).

3. The electronic device of any one of claims 1 to 2, comprising:
a plurality of first openings (334); and
a plurality of second openings (335), wherein the plurality of first openings (334) and the plurality of second openings (335) are alternately arranged.

4. The electronic device of any one of claims 1 to 3, wherein the second opening (335) is disposed between the first fixing portion (314) of the first bar (310) and a second fixing portion (324) of the second bar (320).

5. The electronic device of any one of claims 1 to 4, further comprising:
a support plate (340) disposed on the plurality of bars and coupled to the first fixing portion (314) protruding from at least a portion of the first bar (310).

6. The electronic device of any one of claims 1 to 5,
wherein the first housing part (201) includes a bezel (2111) covering an edge of the flexible display (203), and
wherein the support plate (340) is covered by the bezel (2111) such that the support plate (340) is not visually exposed.

7. The electronic device of any one of claims 1 to 6, wherein the first fixing portion (314) is welded to the support plate (340).

8. The electronic device of any one of claims 1 to 7, wherein the support plate (340) has an elongated shape and includes a coupling part (343) coupled to the second housing part (202).

9. The electronic device of any one of claims 1 to 8, further comprising:
a first reinforcing member (350) inserted in the first opening (334).

10. The electronic device of any one of claims 1 to 9, further comprising:
a second reinforcing member (360) arranged to span across the second opening (335) of the protective layer (330).

11. The electronic device of any one of claims 1 to 10, wherein the support plate (340) includes a lattice pattern (341) configured to provide flexibility to the support plate (340).

12. The electronic device of any one of claims 1 to 11, wherein the lattice pattern (341) overlaps with the second opening (335).

13. The electronic device of any one of claims 1 to 12, wherein the first fixing portion (314) is integrally formed with the first bar (310).

14. The electronic device of any one of claims 1 to 13, wherein the first fixing portion (400) is detachably coupled to the first bar (310).

15. The electronic device of any one of claims 1 to 14,
wherein the first bar (310) includes:
an inner surface (3032) facing the flexible display (203); and
an outer surface (3031) opposite to the inner surface (3032),
wherein the first fixing portion (400) includes:
a planar part (401) disposed on the outer surface (3031);
a first insertion part (402) extending from the planar part (401) and inserted in a first groove (306) formed on the outer surface (3031); and
a second insertion part (403) extending from the planar part (401), at least partially accommodated in the first opening (334) and inserted in a second groove (307) formed on the inner surface (3032).
